# EUROPEAN PATENT SPECIFICATION

(11) **EP 1 750 945 B1**
(45) Date of publication and mention of the grant of the patent: **12.01.2022**
(21) Application number: 05745218.7
(22) Date of filing: 30.05.2005
(51) Int. Cl.: D06P 5/00, D06P 5/20, D06P 5/30, B41M 5/00, B41J 11/00, B41J 3/407, B41M 7/00

(54) **A PROCESS AND SYSTEM FOR PRINTING IMAGES ON ABSORPTIVE SURFACES**
PROZESS UND SYSTEM ZUM DRUCKEN VON BILDERN AUF ABSORBIERENDE OBERFLÄCHEN
PROCEDE ET SYSTEME D'IMPRESSION D'IMAGES SUR DES SURFACES ABSORBANTES

(30) Priority: 30.05.2004 IL 16223104; 11.08.2004 IL 16345904; 10.02.2005 US 651230 P; 10.02.2005 WO PCT/IL2005/000166
(43) Date of publication of application: 14.02.2007
(73) Proprietor: Kornit Digital Ltd., 56910 Moshav Magshimim (IL)
(72) Inventor: PEARL, Yossi, 62093 Tel-Aviv (IL); BEN-ZUR, Ofer, 43220 RaAnana (IL)
(74) Representative: Beck Greener LLP
(86) International application number: PCT/IL2005/000558
(87) International publication number: WO 2005/115089

(56) References cited:
- EP-A1- 1 247 890
- DE-A1- 3 121 043
- US-A- 4 380 770
- US-A- 5 582 104
- US-A1- 2002 060 728
- US-A1- 2003 064 206
- US-A1- 2003 205 159
- US-A1- 2004 100 542
- US-A1- 2005 098 054
- US-B1- 6 291 023

## Description

The present invention relates to the field of printing and, more particularly, to novel methods and apparatus for high-resolution, high-definition multicolor direct printing on surfaces such as textile.

The ever growing demand for new and stimulating garment and fabric fashion, one of the greatest commercial markets, challenges cutting edge technology to innovate in areas such as fiber materials, weaving and threading, cloth fabrication, dying and post treatment of textile fabrics. Still, the area in which technology can contribute the most is in the merging of textile with the limitless world of designer art. Hence, most promising is the area of textile printing of designer's art, which is still not fulfilled satisfactorily by the present technologies.

There are several technical and logistic challenges on the way to accomplishing the goal of high-resolution, high-definition art printing unique to textile printing, especially when the fabric is used for a garment. The printed image should withstand recurrent washings, stretching and other conditions of typical use of a garment while maintaining its vivid colors. It is further desired that the printed area would have a similar texture and pleasant feel of the original fabric. Finally, the process should to be reproducible, adapted for mass production and cost-effective while maintaining the quality of the printed image.

To date, several technologies are typically used for printing on textile surfaces. These include, for example, mold block techniques such as rotogravure and flexographic printing, screen printing, and dye sublimation. However, the requirements set forth above are only partially met with these techniques, as is discussed in detail hereinbelow.

Rotogravure printing uses an etched metal printing cylinder. The printed image is etched into the cylinder as many small cells. When the printing cylinder passes through the ink reservoir, the cells are filled with ink. The excess ink is wiped from the surface of the printing cylinder with a doctor blade leaving the image inked. The printing cylinder then transfers the image to the textile material as it comes in contact with the impression cylinder.

Rotogravure printing is ideal for long run high fidelity half tone printing at high speeds, yet it is one of the most expensive techniques due to the high cost of plate cylinder production. As other printing mold block techniques, rotogravure printing is less suitable for complex, multicolor images and designs on textile.

Another printing mold block technique is flexographic printing, which uses a raised image on a printing plate cylinder to transfer the image to the material. Flexo-plates are usually made from rubber or rubber-like materials. The raised image area picks up ink from the etched anilox roller and transfers the image to the textile material when it comes in contact with the impression cylinder.

Flexographic printing is a popular printing process because of its relatively cheap printing plates, faster set-up time and its ability to print long or short runs at high production rates. Flexography is capable of half-tone printing on central impression cylinder presses with the aid of a doctor blade to control ink distribution and fine line anilox rolls. Its main disadvantage is its incapacity to create a high definition multicolor image on textile.

Screen printing, oftentimes referred to as "silk-screening", is presently one of the most common techniques for textile printing, and is particularly suitable and applicable for flat or relatively flat surfaces. The gist of this technique involves forcing ink through a stenciled fine mesh or screen, typically made of stainless steel in industrial settings or silk in more traditional settings, which is tightly stretched around a rigid frame, directly to the textile material. The areas that should not to be printed are masked out on the screen. To create the print, the screen is positioned over the item to be printed, and thick ink is placed on the screen. A squeegee is then used to press the ink through the screen and the masked areas prevent the ink from passing from the desired areas. The textile is then heated and dried to cure the ink so as to permanently affix the image to the textile material.

In cases where a multicolor image is desired, the process is repeated using a different screen for each color. The screens are usually placed on a rotary press which allows the different color prints to be properly aligned or registered with each other. Some screen-printers have fully automatic presses that do not require any manual labor other than set-up and loading/unloading.

The inks used in screen-printing are typically non-aqueous solvent-based plastisols or aqueous-based inks. Plastisols typically include liquid plasticizers and a suspension of vinyl powder mixed with coloring agents. When the liquid is heated (typically to 180 °C) the vinyl melts and dissolved into the plasticizer. Upon cooling, the ink solidifies to various degrees of hardness, and thus a printed image that gives an unpleasant feel is formed. Aqueous-based inks tend to absorb in the fabric, and smudge, and thus oftentimes a blurred image is formed.

Masking the screen can be effected via various routes. The most straightforward route involves application of a masking fluid directly on the screen. This technique is suitable for simple, one or two color, graphics but is ineffective for more complex and photorealistic prints. For multi-color prints, screen-printers often use photosensitive emulsions to create the masked areas. The design is created on a clear piece of plastic film, while a photosensitive fluid coating is applied to the entire surface of the screen and then dried. The film is placed on the prepared screen and the surface is exposed to a very bright light. After a period of time, the exposed areas can be washed off the screen with water and printing is effected.

Screen-printing is typically used for T-Shirts, garments and other fabrics, but can also be used for other substrates, ranging from plastic to metal. Although small and intricate details can be captured, screen-printing is more suitable for bold and graphic yet simple designs, and less for multicolor, photorealistic images. In any event, as mentioned above, this technique typically results in a blur image and/or an image with an unpleasant feeling.

Other methods for printing multicolor images onto textile are transfer techniques. In these techniques, the image is created off the fabric on a special paper or decal containing an adhesion agent layer. When applied to the fabric, heat and pressure causes the image to transfer to the fabric. The resulting image is vivid and of high definition, but tends to crack upon usage, has an unpleasant feel and seals the fabric from "breathing".

Dye sublimation printing is another method presently used for creating high definition, vivid multicolor images on polyester bland fabrics. The inks are transferred to the fabric by a heat-driven sublimation, creating a soft and high resolution image. The process utilizes special inks, which are passed through an inkjet printer onto a simple paper, and the printed image is heat-transferred onto the substrate textile material.

This technique is a viable alternative for short to medium production runs. However, the process is limited only to polyester bland fabrics and, furthermore, the use of special inks and the extra step of sublimation render this technique highly expensive.

The presently used printing methods detailed above therefore fail to meet contemporary demands of the fashion industry by failing to produce high-resolution and photorealistic multicolor images. The disadvantages of these methods generally result from the multi-step processes that are involved, the cost and time-consuming pre-treatment of the fabrics, and, above all, the mediocre results obtained thereby. Moreover, at least some of these methods are limited to certain types of textile surfaces and colorants.

One approach for increasing textile printing speed, quality, versatility and simplicity involves the use of inkjet printing. Since the introduction thereof in the latter half of the 1980s (see, for example, U.S. Patents Nos. 4,312,007 and 4,380,770), inkjet printers have grown in availability, performance and popularity while dropping significantly in price, mostly due to their reliability, relatively quiet operation, versatility, graphics capability, print quality, and low cost. Moreover, inkjet printers have made possible "on demand" color printing without the need for complicated devices.

An inkjet printer is a printer that places droplets of ink onto a subject surface, so as to create an image. The dots created by the droplets are very small, ranging between 50 to 60 microns in diameter. The dots are positioned precisely, usually by a digital process, with resolutions of up to 1440 over 720 dots per inch (dpi) in common home printers. The dots can have different colors, depending on the number of inks used by the printer and the image requirements, which are combined together to create photo-quality images. An ink-jet printing apparatus typically includes an inkjet printing head having a multitude of nozzles that are used to spray droplets of ink, whereby each printing head is typically responsible for spraying a different color ink. Depending on the printing technique used, ink cartridges are available in various combinations, such as separate black and color cartridges, color and black in a single cartridge or a cartridge for each ink color. In some printer models the cartridge and printing head are combined to one unit.

Inkjet printers are capable of printing on a variety of surfaces. For example, commercial inkjet printers can spray directly on a non-flat, curved item such as the label on a glass bottle. For consumer use, there are a number of specialty papers, ranging from adhesive-backed labels or stickers to business cards and brochures.

When the desired surface is a garment or another textile fabric surface, digital inkjet technology is probably the most favorable technique for designer art and image creation. It is relatively cheap and versatile, yet can provide high resolution multicolor photorealistic images, as many households experience with their low cost, high resolution inkjet home computer printers.

The presently available inks for ink-jet printing include aqueous-based inks and non-aqueous solvent-based inks. Aqueous-based inks are typically composed of water and a colorant, usually a dye or pigment dispersion, and may further contain a number of additives for imparting certain features to the ink (e.g., improved stability and flow, feather resistance, and the like). Non-aqueous solvent-based inks are typically composed of one or more volatile organic solvents, such as low alcohols, low alkanes and the like, and a colorant.

Inkjet printers are typically controlled by a computer on which the image is rendered and processed for printing. The digital data, which is typically originated from a software-driven driver, is sent to a printing head stepper motor, or linear motor driven stage, which moves the printing head array (printing head and ink cartridges) back and forth across the subject surface, while applying ink droplets on the surface, so as to form the desired image.

Presently, there are two main inkjet printing techniques for applying ink droplets onto the subject surface:
The first technique is known as thermal bubble and is further commonly referred to as bubble jet (see, for example, U.S. Patent No. 4,296,421). In a thermal inkjet printer, small electrical resistors create heat which vaporizes the ink to create a bubble. As the bubble expands, some of the ink is pushed out of a nozzle onto the subject surface. When the bubble collapses, the created vacuum pulls more ink into the printing head from the reservoir in the ink cartridge. A typical bubble jet printing head has 300 or 600 small nozzles, all of which can apply a droplet simultaneously.
The second technique utilizes piezoelectric print heads, in which piezo crystals are used (see, for example, U.S. Patent No. 4,312,007). A piezo crystal is located at the back of the ink reservoir of each nozzle. The crystal receives a minute electric charge that causes it to vibrate. When the crystal vibrates inward, it forces a small amount of ink out of the nozzle. When it vibrates out, it pulls some more ink into the reservoir to replace the ink sprayed out.

An inkjet printing process of an image typically includes the following basic steps:
A software application breaks the image into pixels (unit of information which depicts one point of a computerized graphic image), and sends the digital data regarding the positioning and color composition of each pixel to be printed to the printer driver.

The driver translates the data into an executable format.

The printer then receives the data and executes the actual printing by activating the control circuitry. The control circuitry sets various stepper motors, or linear motor driven stages, into motion for moving the surface back and forth under the printing head array, and to move the printing head array right and left across the surface. In some large scale commercial inkjet printers, the surface remains stationary and the printing head array is the only moving part. The printing head stepper motor typically uses belts to move the printing head array across the surface. The alternative linear motor driven stage uses an accurate linear sprocket track and sprocket wheel to move the printing head array across the surface. Typically the image is printed a line at a time. The motor pauses for a fraction of a second each time that the printing head sprays droplets of ink on the surface and then moves to the next pixel position before stopping again. Multiple dots are made at each stop when the print heads spray a combination of basic colors in precise amounts to make various colors. At the end of the pass, the stepper motors, or the linear motor driven stage, move the printing head array to the next line (beginning or end, depending on the model) and the process is repeated until printing the image is completed.

The image obtained by an ink-jet process on high quality inkjet paper has relatively good quality, particularly in view of the cost and effort put in the process.

Unfortunately, however, using inkjet printing techniques for printing on other surfaces, and particularly more absorptive surfaces such as textiles, is associated with various limitations. First, inkjet printed images on textiles are often of low quality. For example, the printed images often smudge upon handling, exhibit bleeding (the intrusion of one color into an adjacent color) and infiltration (the diffusion of the image through the fabric), are moisture sensitive, and are dull, i.e., the colored inks fail to accurately produce the expected hues. Moreover, the printed images are often neither water-fast nor detergent-resistant, resulting in fading of the printed image after washing and further oftentimes fail to meet the demand for pleasant hand feel. While the textile industry requires that the image be both water-resistant and detergent-resistant, that the colors and hues would be as vivid as possible, that the colorant of the ink would adhere tenaciously to the substrate, and that the desirable hand properties of the substrate would be maintained, the presently known inkjet printing techniques fail to accomplish these requirements.

Several techniques are presently known in the art which are aimed at overcoming the limitations associated with digital inkjet printing on textile and other absorptive surfaces. These include, for example, pre-treatment of the fabric prior to the printing process. Thus, U.S. Patents Nos. 6,291,023, 6,698,874 and 6,840,992, for example, teach coating compositions which are applied on the fabric prior to printing. Albeit, these pre-treatments are not suitable for all fabric materials, use environmentally unfriendly chemicals, are time-consuming and cost-ineffective.

Other attempts aimed at achieving a high-quality, long-lasting image, involve protection of the image, once applied on the surface, by a protective coating, as taught, for example, in U.S. Patent No. 6,626,530. These attempts, however, reduce the simplicity and cost-effectiveness of the process, while resulting in a final product with an unpleasant feel.

DE3121043 discloses a two-phase single-step fixing process for reactive dyeings on cellulose fibres with highly reactive dyes operates according to the wet-on-wet principle in such a way that the print paste which contains the reactive dye is printed onto the textile without alkali and the fixing alkali is printed on thereafter, or vice versa. The textile material is dried immediately thereafter.

US2002060728 discloses an ink-jet textile printing system includes an ink-jet printing mechanism capable of textile printing on a printing object formed by a cloth product such as a T-shirt, a printing tray for holding a printing target range of the printing object flat, and conveying the printing object while positioning the printing target range with respect to the ink-jet printing mechanism, and a printing object formed by a cloth product such as a T-shirt having a partial pre-process portion obtained by partially pre-processing only the printing target range.

US2004100542 discloses an ink set composition, an apparatus, and a method of providing an image on a receiver, the method includes operating a printhead having a first segment that applies a gloss matching fluid to the non-imaged area of the printed area of the image and a second segment that applies an ink set having at least one color to the imaged area of the printed area of the image.

US2003064206 discloses an image recording method that includes applying a pretreatment liquid on a surface of a recording material and discharging a recording ink according to image signals to form an ink image on the pretreatment liquid on the surface of the recording material before the pretreatment liquid applied to the recording material has dried.

EP1247890 discloses an ink acceptor solution for pretreatment of cloth for ink-jet printing comprising a naturally occurring polymeric thickening agent dissolved in water as an ink acceptor and an antiseptic agent thermally decomposable at 50-200°C.

Hence, while the prior art teaches various methods for printing images on various surfaces, these techniques, including the most promising technique of inkjet printing, are limited by the ability to create a multicolor, high resolution photorealistic image on textile. Most commonly used techniques suffer from adverse characteristics such as feathering (bleeding) and deep infiltration of the ink when applied on absorptive surfaces and inaccurate placement of the inks due to stray fibers which plagues the end result with blurriness and lack of high definition, in addition to the unpleasant hand-feel (and odor) of pre-treated fabrics and the unpleasant hand-feel and cracking of plasticized colorants.

There is thus a widely recognized need for, and it would be highly advantageous to have, a method for high-resolution, high-definition multicolor printing on absorptive surfaces in general and textile fabrics in particular, devoid of the above limitations.

The present inventors have now surprisingly found that by wetting a surface onto which an image is to be printed with a wetting composition that interfere with the engagement of the ink with the surface and thus temporarily modify the surface mechanical, physical and/or chemical characteristics, and thereafter forming an image by a typical printing process, on the wet surface, results in high-resolution, high-definition and vivid images, with no bleeding and diffusion of the ink.

According to an aspect of the present invention, there is provided a process of digital inkjet printing an image directly on a 100% cotton fabric surface as set out in the appending independent claim. Features of various embodiments are set out in the appending dependent claims.

The present invention provides a novel and efficient process for printing high-resolution, high-definition photorealistic images on various absorptive surfaces, in which limitations that typically lead to reduced resolution and dullness of the resulting image, such as engagement of the ink with binding sites of the surface, are circumvented.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the present disclosure, suitable methods and materials are described below. In case of conflict, the patent specification, including definitions, will control. In addition, the materials, methods, and examples are illustrative only and not intended to be limiting.

Implementation of the method and system of the present disclosure involves performing or completing selected tasks or steps manually, automatically, or a combination thereof. Moreover, according to actual instrumentation and equipment of the methods and systems of the present disclosure, several selected steps could be implemented by hardware or by software on any operating system of any firmware or a combination thereof. For example, as hardware, selected steps of the disclosure could be implemented as a chip or a circuit. As software, selected steps of the disclosure could be implemented as a plurality of software instructions being executed by a computer using any suitable operating system. In any case, selected steps of the method and system of the disclosure could be described as being performed by a data processor, such as a computing platform for executing a plurality of instructions.

As used herein, the term "comprising" means that other steps and ingredients that do not affect the final result can be added. This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

The term "method" or "process" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

As used herein, the singular form "a," "an," and "the" include plural references unless the context clearly dictates otherwise. For example, the term "a compound" or "at least one compound" may include a plurality of compounds, including mixtures thereof.

Throughout this disclosure, various aspects of this disclosure can be presented in a range format. It should be understood that the description in range format is merely for convenience and brevity. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1 presents a schematic simplified perspective view of a garment printing system;
FIGs. 2A, 2B and 2C present side, front and top simplified views, respectively, of a garment printing system;
FIG. 3 is presents a schematic simplified side view of a garment printing system;
FIG. 4 presents a schematic illustration of a wetting system;
FIG. 5 presents a schematic perspective view of a wetting battery of solenoid valves and spraying nozzles;
FIG. 6 presents a schematic perspective view of two wetting batteries mounted over a bridge;
FIG. 7 presents a simplified perspective view of a pre-printing system, which is a part of the printing system presented in Figures 2A, 2B and 2C, equipped with the wetting system presented in Figure 4;
FIG. 8 presents a schematic simplified perspective view of a battery of solenoid valves and spraying nozzles equipped with a bath of thinner liquid;
FIGs. 9A and 9B present schematic simplified perspective views of a battery of solenoid valves and spraying nozzles equipped with a bath of thinner liquid;
FIG. 10 presents a simplified perspective view of a garment mounting assembly onto which the garment is manually mounted before the printing process commences;
FIG. 11 presents a simplified perspective view of the garment mounting assembly presented in FIG. 10, with a mounted garment in an open position;
FIG. 12 presents a simplified perspective view of the garment mounting assembly presented in FIG. 10, with a mounted garment in a close position;
FIG. 13 presents a simplified schematic view of an inkjet printing head assembly;
FIGs. 14A, 14B, 14C, and 14D, taken together, are simplified schematic illustrations of several stages of the ink application process, showing four separate passes of the printing assembly needed to cover the entire area of the image in order to achieve high-resolution image;
FIG. 15 presents a simplified flow chart of one exemplary stepwise use of the printing process using the wetting composition on the garment prior to printing;
FIGs. 16A and 16B are photographs presenting the front side (Figure 16A) and the back side (Figure 16 B) of a 100% cotton garment onto which an image was directly printed using an inkjet printing machine;
FIGs. 17A and 17B are photographs presenting the front side (Figure 17A) and the back side (Figure 17 B) of a 100% cotton garment onto which an image was printed after contacting the surface of the garment with a wetting composition, using an inkjet printing machine;
FIGs. 18A and 18B present photographs of the front side of 100% cotton garments onto which an image was printed, using an inkjet printing machine, with (Figure 18B) and without (Figure 18A) applying a wetting composition on the surface of the garment prior to forming the image; and
FIGs. 19A and 19B present photographs of the back side of 100% cotton garments onto which an image was printed, using an inkjet printing machine, with (Figure 19B) and without (Figure 19A) applying a wetting composition on the surface of the garment prior to forming the image.

The present disclosure provides a process and apparatus for printing an image on surfaces, which are particularly beneficial for printing multicolor images on absorptive surfaces such as, but not limited to, textile fabrics and garments.

The principles and operation of the process and the apparatus may be better understood with reference to the accompanying descriptions and examples.

As is described in detail hereinabove, meeting the demands of the modern textile and designer fashion industries requires processes and tools which can produce high-resolution, high-definition multicolor and photorealistic images on textile fabrics and garments. The presently known and used textile printing technologies are all accompanied by one or more limitations which render them disadvantageous, ranging from image quality, image sustainability and hand-feel, to cost and time consumption in industrial scale.

In general, a conventional method of printing on textiles involves the binding of a colorant in a form of an ink to the surface of a fibrous material. However, processes that involve such a method typically fail to produce high resolution and multicolor photorealistic images since: (i) the process involves the use of a mold requiring multiple passes for each color which are hard to superimpose; (ii) the absorptive nature of the fabrics leads to absorption and bleeding of the ink droplets in the fabric and thus reduces resolution and brightness; and/or (iii) the unpleasant hand-feel of an image which was transferred to the fabric by a decal. Moreover, some of these processes are limited to certain types of textile surfaces and colorants that can be used. Several yet limited solutions to the prevalent limitations associated with printing on textiles include the time- and cost-consuming pre-treatments of the fabric, and using the expensive and slow process of dye sublimation printing. Nevertheless most procedures end in unsatisfactory results.

One of the key limitations in the process of applying a liquid ink on absorptive surfaces, such as those made of fibrous materials or porous materials, stems from the interaction of the liquid ink with the material once the ink is applied, and before the ink is fully cured and fastened to the fabric. As is well known to a skilled artisan, when ink droplets are absorbed into an absorptive material upon contacting the surface, the color dots begin to feather (bleed), spread out in an irregular fashion, and therefore cover a larger area than the intended area, thus producing a fuzzy image with dull colors and low definition. Hence, while the quality of the printed image depends on the degree of absorption of the ink in the material of the subject surface, it is well recognized that in order to achieve a high-resolution and high-definition multicolor image on absorptive surfaces (obtained, for example, by spraying the inks onto the fabric's surface), it is highly desirable that an applied ink droplet would stay as a tight, symmetrical dot once being in contact with the fabric, and until it is fully cured.

The presently known printing technologies are also limited when applied on other absorptive surfaces, as well as surfaces that are characterized by high surface tension and glossy finish. In the latter type of surfaces, the ink droplets tends to expand and over-spread due to physical interactions adverse to the printing process, thus leading to reduced resolution of the printed image.

In a search for a comprehensive and efficient solution for the limitations associated with printing on absorptive surface, such as a textile fabric, as well as other problematic surfaces as described hereinabove, the present inventors have envisioned that the quality of a printed image could be enhanced by temporarily modifying the physical, chemical and/or mechanical characteristics of the surface. It was thus hypothesized that such a modification could be achieved by contacting the surface with an agent that would temporarily modify these characteristics of the surface such that the engagement of the ink with the binding sites of surface would be decreased. It was further hypothesized that such an agent can be comprised of simple, available organic composition and thus it was further envisioned that such a methodology would result, in addition to the improved quality of the image, in a cost-effective process, and in a printed surface with no adverse characteristics such as unpleasant feel.

While reducing the above findings to practice, as is demonstrated in the examples section that follows, the present inventors have surprisingly found that utilizing such a methodology indeed results in a significantly improved quality of the printed image. More specifically, it was found that contacting a textile surface with variable wetting compositions, prior to applying the ink thereon, rendered the surface of the textile fabric temporarily less absorptive to the ink, such that the dots of the ink did not feather or bleed until the ink was fully applied and further cured on the surface, thereby affording a sharp, highly defined and vivid image.

Hence, there is provided herein a process of printing an image on a surface. The process is effected by wetting at least a part of the surface with a wetting composition; and applying a liquid ink composition on the wet part of the surface, so as to form an image thereon.

As is discussed hereinabove, the wetting composition is selected capable of interfering with the engagement of the liquid ink composition with at least one binding site of the surface. Such an interference includes, for example, temporarily modifying a mechanical property of the surface by, for example, reducing the contact area between the ink composition and the surface by, e.g., filling the pores in the surface or flattening perturbing objects such as stray fibers; temporarily modifying a physical property of the surface by, for example, reducing the surface tension formed between the surface and the ink composition; and temporarily modifying a chemical property of the surface by, for example, engaging the binding sites of the surface by, e.g., interacting with functional groups on the surface, masking, neutralizing or inverting the charge of functional groups on the surface. As used herein the phrase "binding site" describes any site of the surface that may interact, either chemically, mechanically or physically, with the ink composition. These include, for example, functional groups on the surface that may chemically bind compatible functional groups present in the ink composition; functional groups on the surface that may form hydrophobic or hydrophilic interactions with compatible functional groups present in the ink composition; flattening perturbing objects such as stray fibers that can interfere with the uniform application of the ink composition on the surface; any dry area of the surface which may thermodynamically promote absorption of the liquid ink composition; and any area of the surface which due to too high or too low surface tension promotes minimization or maximization of surface area of the ink droplets on the surface.

Applying the liquid ink composition can be effected by any of the printing techniques known in the art, including, but not limited to, ink-jet printing, screen printing, printing block (mold) techniques, dye sublimation techniques and the likes.

As used herein, the phrase "at least a part of the surface" describes one or more areas of the surface, and includes also the entire surface. Preferably the part of the surface that is contacted with the wetting composition includes the area onto which the ink is later on applied, namely, the total area covered by the printed image. The areas may be continuous or discontinuous.

Hereinunder in this section, the term "surface" is used to describe any area of the surface, including specific parts of the surface, as described above.

The printing process may further include, subsequent to the formation of the image, curing the image. The curing can be effected by heat and/or dry air emanating from a heat source such as, for example, an infrared conveyor or a filament coil, or a dry air source such as, for example, a hot air blower.

Contacting the surface with the wetting composition, according to the process disclosed herein, may be performed by any method or technique for applying a liquid onto an object, including, but not limited to, spraying, ejecting, smearing, spreading, brushing, dipping, dripping, impregnating, pouring, condensing, scattering, dispersing, dissipating, dissolving, melting, or a combination of some of these wetting methods. Alternatively, contacting the surface with the wetting composition can be effected by converting a composition to a liquid form on an object, e.g., by condensation of a vaporized liquid onto the surface or melting a solidified liquid onto the surface. A suitable method is selected so as to comply with the physical properties of a specific wetting composition, and to comply with a given printing machine and technology.

According to an example, contacting the surface with the wetting composition is effected by spraying, ejecting or dripping the wetting composition onto the desired part of the surface, by means of a liquid applicator. These methods are most suitable for a controlled and automatic in-line wetting procedure, and can therefore be easily implemented as a part of many mechanized printing techniques.

Contacting the surface with the wetting composition can be further controlled by pre-determining the area of the surface that is to be wetted by the wetting composition, so as to contact with the wetting composition only that specific, predetermined area of the surface onto which the image is printed in the subsequent stage of the process. The pre-determination of the area to be wetted allows for optimization of the entire printing process which depends on accurate material quantification, i.e., of the wetting and the ink compositions, and accurate timing of each printing steps, i.e., the wetting, the ink application and the curing steps. The pre-determination of the area of the surface can by readily established by a computerized algorithm. Hence, the part of the surface that is contacted with the wetting composition is predetermined digitally.

Applying a sufficient amount of the wetting composition on the surface is essential for the effectiveness of the wetting process and the quality of the resulting image. The amount of the wetting composition applied on the surface during the contacting described above can be controlled by the liquid applicator mechanism. A suitable amount would be an amount which ensures uniform and adequate coverage of the surface with the wetting composition and further which ensures efficient modification of the surface physical characteristics regarding the engagement of the ink with the binding sites of the surface material. Yet, an excessive amount of the applied wetting composition may form a thick layer thereof, which may minimize the interaction of the ink and the surface and thus adversely affect the durability of the resulting image.

Preferably, contacting the surface with the wetting composition is performed so as to obtain a wet part of the surface in which the density of the wetting composition ranges from about 0.01 gram per 1 cm² of the surface to about 2 grams per 1 cm² of the surface, more preferably from about 0.05 gram per 1 cm² to about 1 gram per 1 cm², more preferably from about 0.1 gram per 1 cm² to about 1 gram per 1 cm² and, more preferably, from about 0.2 grams per 1 cm² to about 0.6 grams per 1 cm².

As used herein the term "about" refers to ± 10%.

As is discussed hereinabove, the present inventors have studied the effect of various wetting compositions in various combinations with different ink compositions. The obtained results indicated a possible effect of the surface tension of the wetting composition with respect to that of the ink composition. Hence, without being bound to any particular theory, it is assumed that contacting the surface with a wetting composition renders the resulting wet surface temporarily less absorptive to the ink by reducing its surface tension. More specifically, it is assumed that the interference with the engagement of the ink composition with the surface is at least partially affected by reducing the surface tension of the surface. Thus, it is assumed that a wetting composition characterized by a low surface tension in general, and particularly with respect to the liquid ink composition may interfere with the absorption of the ink into an absorptive surface such as a textile fabric. Therefore, it is assumed that preferred wetting compositions according to the present disclosure are those which exhibit the required surface tension difference between a given liquid ink composition and the wetting composition.

The phrase "surface tension" as used herein, refers to the phenomena exhibited when two fluids become in contact, stemming from the difference in the molecular attraction forces of the molecules in each liquid, which reveals itself at in the interface between the liquids. The surface tension is a result of the unbalanced force experienced by molecules at the surface of a liquid. As a result of surface tension, a drop of liquid tends to form a sphere, because a sphere offers the smallest area for a definite volume. The higher the surface tension, the tighter the sphere will be, and vice versa, the lower the surface tension is, less is the tendency of the liquid to form a spherical droplet. Substances with low surface tension have a tendency to form films. For example, the force of adhesion between an aqueous liquid and a liquid hydrocarbon is very small compared to the force of cohesion between the water molecules in the aqueous liquid. As a result, water does not adhere to wax and tends to form spherical beads, or droplets, with the smallest possible surface area, thereby maximizing the force of cohesion between the water molecules. One method of measuring surface tension is by means of a capillary tube. If a liquid of density d rises a height *h* in a tube of internal radius r, the surface tension is equal to *rhdg*/2. The result will be in dynes per centimeter if r and *h* are in centimeter, *d* in grams per centimeter cube (cm³) and g in centimeter per second square (sec²). It is noted that 1 dyn/cm equals to 0.001 N/m.

Hence, according to an example, the wetting composition is characterized by a relatively low surface tension.

Preferably, the surface tension of the wetting composition is lower than 50 dynes per centimeter. Further preferably, the surface tension of the wetting composition ranges from about 35 dynes per centimeter to about 15 dynes per centimeter. More preferably, the surface tension of the wetting composition ranges from about 25 dynes per centimeter to about 10 dynes per centimeter.

According to another example, the wetting composition and the liquid ink composition are selected such that the surface tension of the wetting composition is lower that the surface tension of the liquid ink composition. Preferably, the surface tension of the wetting composition is lower than the surface tension of the liquid ink composition by at least 2 dynes per centimeter, more preferably by at least 3 dynes per centimeter, more preferably by at least 5 dynes per centimeter and even more preferably by at least 10 dynes per centimeter.

According to an example, the wetting composition includes one or more organic solvents.

Since, as is discussed hereinabove, the wetting composition is aimed at temporarily modify the mechanical, physical and chemical properties of the surface during the application of the ink thereon, while not affecting other properties of the surface, it is highly desirable that at least a majority the wetting composition could be removed from the surface once the printing process is completed. One of the simplest routes of removing substances under these conditions is by evaporation. Therefore, preferred organic solvents are characterized as volatile.

As used herein, the term "volatile" refers to a substance or a composition that is characterized by a relatively low boiling point and/or high evaporation rate.

As is well accepted in the art, boiling points below 100 °C are considered as relatively low boiling points. Hence, according to an example, the organic solvent has a boiling point lower than 100 °C. Such organic solvents can be easily removed once the printing process is completed, during, for example, the curing process, as described above, which involves application of heat or air blow onto the surface.

Preferred organic solvents according to this example are further characterized by an evaporation rate that is greater than 0.1, preferably greater than 0.2 and typically ranges between 0.1 and 5. As is well known in the art, values of evaporation rates of substances are determines with reference to the evaporation rate of butyl acetate, which is arbitrarily set as 1.

As is discussed hereinabove, since it is assumed that characteristics such as volatility and low surface tension improve the beneficial effect of the wetting composition, preferred organic solvents are those that exhibit such characteristics. Representative examples of such organic solvents include, without limitation, alkanes, alkenes, cycloalkanes, cycloalkanes and aryls, which are collectively referred to herein as hydrocarbons, alcohols, ketones, ethers, alkyl polysiloxanes, heteroalicyclics, heteroaryls and any combination thereof.

As used herein, the term "alcohol" describes a chemical substance that bears one or more hydroxyl groups. The term "hydroxyl" refers to a -OH group. An alcohol can be represented by R-OH, wherein R is alkyl, a cycloalkyl, alkenyl, alkynyl, aryl, heteroaryl and the likes, as these terms are defined hereinbelow. However, this term further encompasses such groups which bear two or more hydroxyl groups. Such substances are also referred to herein as polyols.

Non-limiting examples of alcohols that are suitable for use in the context of the present disclosure include methanol, ethanol, propanol, 2-propanol, 1-butanol, 2-butanol and pentanol. The presently most preferred alcohols are ethanol, 2-propanol (isopropyl alcohol, IPA) and 1-butanol.

Non-limiting examples of polyols that are suitable for use in the context of the present disclosure include ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thioglycol.

The term "ketone" describes a chemical substance that has one or more carbonyl groups. The term "carbonyl" as used herein, describes a -C(=O)-R', thus a ketone can be represented by R-(C=O)-R' wherein R is as define hereinabove, and R' is as defined for R.

Non-limiting examples of ketones that are suitable for use in the context of the present disclosure include acetone, cyclopentanone, cyclohexanone, methyl ethyl ketone and pentan-3-one. The presently most preferred ketone is cyclohexanone.

The term "ether" describes a chemical substance having one or more alkoxy groups. The term "alkoxy" refers to an -OR group, wherein R is as described hereinabove, and thus an ether can be represented by R-O-R', wherein R and R' are each independently as define hereinabove.

Non-limiting examples of ethers that are suitable for use in the context of the present disclosure include ethylene glycol butyl ether acetate, propyl methyl ether, methoxy propanol, diethyl ether, 1-methoxyhexane, 1-ethoxyhexane and 1-propoxypentane. The presently most preferred ethers are ethylene glycol butyl ether acetate and propyl methyl ether.

The phrase "alkyl polysiloxanes" describes a polymeric chemical substance having the general formula 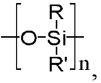 wherein n is an integer denoting the number of repeating polymeric units, and R and R' are each independently as defined hereinabove. Preferably, n is an integer from 1 to 3.

Non-limiting examples of alkyl polysiloxanes that are suitable for use in the context of the present disclosure include dimethyl polysiloxane, ethyl methyl polysiloxane, phenyl methyl polysiloxane and nitrilobutyl phenyl polysiloxane. The most preferred alkyl polysiloxane is dimethyl polysiloxane.

The term "alkane" or "alkyl" describes a saturated aliphatic hydrocarbon including straight chain and branched chain groups. Preferably, the alkane has 6 to 20 carbon atoms. Whenever a numerical range; *e.g.,* "6-20", is stated herein, it implies that the group, in this case the alkane, may contain 6 carbon atom2, 7 carbon atoms, 8 carbon atoms, etc., up to and including 20 carbon atoms. More preferably, the alkane is a medium size alkane having 6 to 14 carbon atoms. Most preferably, unless otherwise indicated, the alkane is a lower alkane having 6 to 10 carbon atoms. The alkane may be substituted or unsubstituted. Substituted alkanes may have one or more substituents, whereby each substituent can independently be, for example, halide, alkyl, cycloalkyl, alkenyl, alkynyl, aryl, heteroaryl and the likes.

The term "halide" group refers to fluorine, chlorine, bromine or iodine.

Non-limiting examples of alkanes that are suitable for use in the context of the present disclosure include hexane, heptane, octane, petroleum ether, tert-butylchloride, isobutylchloride, perfluorohexane, perfluoroheptane and perfluorooctane. The most preferred alkanes are petroleum ethers, heptane, octane and perfluorohexane.

The term "cycloalkane" or "cycloalkyl" refers to an all-carbon monocyclic or fused ring (*i.e.,* rings which share an adjacent pair of carbon atoms) group where one or more of the rings does not have a completely conjugated pi-electron system. The cycloalkane may be substituted or unsubstituted. When substituted, the substituent group can be, for example, halide, alkyl, cycloalkyl, alkenyl, alkynyl, aryl, heteroaryl and the likes.

The term "aryl" refers to an all-carbon monocyclic or fused-ring polycyclic (*i.e.,* rings which share adjacent pairs of carbon atoms) groups having a completely conjugated pi-electron system. The aryl group may be substituted or unsubstituted. When substituted, the substituent group can be, for example, halide, alkyl, cycloalkyl, alkenyl, alkynyl, aryl, heteroaryl and the likes. Representative examples of aryls are benzene, naphthalene, dichlorobenzene, xylene, cymene and 1-chloro-4-methylbenzene.

The term "heteroalicyclic" refers to a monocyclic or fused ring group having in the ring(s) one or more atoms such as nitrogen, oxygen and sulfur. The rings may also have one or more double bonds. However, the rings do not have a completely conjugated pi-electron system. The heteroalicyclic may be substituted or halide, alkyl, cycloalkyl, alkenyl, alkynyl, aryl, heteroaryl and the likes. Representative examples of heteroalicyclics are piperidine, piperazine, tetrahydrofurane, tetrahydropyrane, morpholino and the likes.

The term "heteroaryl" refers to a monocyclic or fused ring (*i.e.,* rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furane, thiophene, imidazole, oxazole, thiazole, pyrazole, pyridine, pyrimidine, quinoline, isoquinoline and purine. The heteroaryl group may be substituted or unsubstituted. When substituted, the substituent group can be, for example, halide, alkyl, cycloalkyl, alkenyl, alkynyl, aryl, heteroaryl and the likes. Representative examples of heteroaryls are pyridine, pyrrole, oxazole, indole, purine and the likes.

The presently most preferred wetting compositions according to the present disclosure include one or more of the alcohols and hydrocarbons described hereinabove.

The wetting composition may include, in addition to, or instead of, the organic solvent, water.

The wetting composition according to the present disclosure may optionally further include one or more agents which may additionally alter the interaction of the ink composition with the surface.

These agents include, for example, one or more adhesion promoting agents. As is well known in the art, adhesion promoting agents are typically comprised of one or more substantially saturated, predominantly or substantially hydrocarbon oligomers or polymers, containing reactive functional groups that are capable of reacting with a co-polymer or a cross-linking agent upon heat exertion, oxidation, drying and other chemical and physical conditions. By being cross-linked, the adhesion promoting agents typically form an adhesive film.

The addition of the adhesion promoting agent(s) to the wetting composition of the present disclosure beneficially affects the properties of the resulting image by stabilizing the colorants of the liquid ink compositions after the curing procedure, and thus improving the wash-fastness of the printed image. The addition of the adhesion promoting agents may optionally also improve the surface tension relations between the wetting composition and the ink composition.

Non-limiting example of adhesion-promoting agents that are suitable for use in the context of the present disclosure include various polymers and copolymers such as acrylic resins, polyurethane emulsions and resins, polyether resins, polyester resins, polyacrylate resins, polyvinyl chloride resins, polyvinyl acetate resins, polyvinyl butyral resins, aminosilicon resins and combinations thereof.

Additional agents that may be beneficially incorporated in the wetting of the present disclosure include, for example, one or more of viscosity modifying agents, thickening agents, surface tension modifying agents, surface active agents, surfactants, softeners and combinations thereof. The addition of such agents to the wetting composition may improve the effect of the wetting composition and may further provide a selected wetting composition with desirable characteristics. Thus, for example, the addition of surface tension modifying agents enables to use a wetting composition that comprises an organic solvent with moderate surface tension characteristics, which are improved by the added agent. The addition of viscosity modifying agents enables to use a wetting composition that comprises an organic solvent with high viscosity, which is reduced by the added agent, and so on.

Representative examples of agents that can be beneficially added to the wetting composition of the present disclosure include, without limitation, clays, polysaccharides, polyols such as propylene glycol and glycerin, modified siloxanes and polyalkylsiloxanes, aldehyde based liquid resins such as melamines, urea formaldehyde, phtalates, isocyanates, polymers and oligomers having hydroxyl, carboxyl or amide functional groups and catalysts, and thermally activated agents such as peroxides, epoxides, isocyanates and acrylates.

The agents described above can be incorporated in a wetting composition that comprises an organic solvent either *per se,* such that the final form of the wetting composition can be, for example, a mixture, a solution, an emulsion or a suspension, including these agents. Alternatively, these agents can be incorporated as an aqueous solution, suspension or emulsion, such that the resulting wetting composition comprises water.

The agents described above can be applied onto the surface as a part of the wetting composition (typically as a mixture, suspension or an emulsion that comprises one or more organic solvents as detailed hereinabove, one or more of these agents and optionally water), within the contacting of the surface with the composition. Alternatively, these agent(s) can be applied onto the surface prior to or subsequent to contacting the surface with the wetting composition. Further alternatively, a wetting composition that comprises one or more organic solvents can be applied on the surface during the contacting procedure and a wetting composition that comprises a mixture (e.g., an emulsion) of one or more organic solvent and one or more of these agents is applied prior or subsequent thereto.

Alternatively, or in addition to the above, the additional agent(s) can be applied onto the image, either per se or as a part of the wetting composition, subsequent to applying the ink composition. These procedure is aimed at protecting the image from wearing and loosing its definition, as discussed hereinabove.

The concentration of these agent(s) when added to the wetting composition according to the present disclosure preferably ranges from about 0.01 weight percentages to about 75 weight percentages of the total weight of the wetting composition, more preferably from about 0.5 weight percentages to about 15 weight percentages of the total weight of the wetting composition and more preferably from about 1 weight percentages to about 5 weight percentages of the total weight of the wetting composition.

Hence, according to an example, an exemplary wetting composition according to the present disclosure includes 95 weight percents ethanol and 5 weight percents of an acrylic emulsion (about 50% solids) and the process includes application such a composition prior and subsequent to the application of the ink composition. Applying this wetting composition prior to the ink application interfere with the engagement of the ink with the surface, and applying this wetting composition thereafter provides for improved color gamut, definition, brightness and wash-fastness of the printed image.

The printing process according to the present disclosure can be applied using a variety of liquid ink compositions typically used in printing techniques known in the art and therefore can be applied using aqueous-based ink compositions and non-aqueous solvent-based ink compositions.

Aqueous-based ink compositions typically contain deionized distilled water as a main carrier or solvent, and other carriers and coating chemicals such as, for example, cymel 323 (Cytec Industries).

Non-aqueous solvent-based liquid ink compositions typically contain an organic component as a main carrier or solvent. Non-limiting examples of non-aqueous solvent-based liquid ink compositions include as a carrier, or solvent, ethylene glycol butyl ether acetate (EGBEA), cyclohexanone, dipropylene glycol methyl ether (DPM), and/or diethylene glycol.

Non-aqueous solvent-based liquid ink compositions exhibit chemical and physical properties such as high volatility and a typical medium range surface tension. These physical properties requirements make the non-aqueous solvent-based liquid ink composition more compatible with the preferred wetting composition discussed hereinabove, and therefore using such ink compositions can afford images of overall higher quality.

Thus, according to an example, the liquid ink compositions are non-aqueous solvent-based ink compositions.

The presently most preferred liquid ink composition includes as the carrier ethylene glycol butyl ether acetate.

The liquid ink composition used in the process described herein may further include one or more agents such as, for example, adhesion promoting agents, as described hereinabove, which are aimed at improving properties of the resulting image such as durability, and/or provide the ink composition with characteristics that would beneficially affect its interaction with the wetting composition (e.g., enhanced or reduced surface tension and/or viscosity), as is discussed in detail hereinabove.

The concentration of such agents in the liquid ink composition, according to this example, preferably ranges from about 0.01 weight percentage to about 75 weight percentage of the total weight of the liquid ink composition, more preferably from about 0.1 weight percentages to about 50 weight percentages of the total weight of the ink composition and more preferably from about 0.1 weight percentages to about 10 weight percentages of the total weight of the ink composition.

The agents described above can therefore be added to either one or both of the wetting composition and the ink composition. Furthermore, these agents can be applied on the area on the image subsequently to the application of the liquid ink compositions either before or after the curing step. Applying, for example, an adhesion promoting agent on the printed image before the curing can be performed in order to enhance the wash-fastness of the colorants and provide mechanical and chemical protection to the printed image.

A preferred ink composition that can be beneficially used in the context of the present disclosure is disclosed in IL Patent Application No. 163459. The ink composition taught in this application is highly suitable for printing color images on a variety of surfaces, and particularly absorptive surfaces, and is further suitable for inkjet printing processes. The use of this ink composition in various printing process affords a durable printed image which is wash-fast, chemically robust and resistant to physical wear. The ink composition taught in IL Patent Application No. 163459 includes a carrier, as is described hereinabove and is also referred to herein interchangeably as a solvent, a colorant, a polyol, an agent capable of chemically interacting with functional groups present within the substrate, and a catalyst for catalyzing the chemical interaction and may optionally further include various additives for modulating the chemical interaction and formulations of different ink properties and different results in the finished printed image.

The term "colorant" as used herein describes a substance which imparts the desired color to the printed image. The colorant may be a pigment, a lake or a dye. Pigments are solid colorants with are typically suspended in the carrier of the ink composition, whereby dyes are liquid colorants which are dissolved in the carrier of the ink composition.

Apart for imparting the desired color to the printed image, the colorant is selected suitable in terms of its chemical and physical properties. Thus, for example, in an example, the colorant is a heat curable colorant.

Exemplary dye colorants that are suitable for use in this example include, without limitation, azo chrome complexes such as the commercially available Orasol black RLI, Orsal Red G and CU phthalocyanine and similar azo-cobalt complexes. Exemplary pigment colorants that are suitable for use in this context of the present disclosure include, without limitation, quinacridone, benzimidazolone, carbon black, phthalocyanine, diarylide, azo, titanium oxide and calcium carbonate. Exemplary commercially available pigments are such as Permajet, Renol and Microlith.

Preferably, the colorant content in the ink composition according to this example ranges from about 0.2% to about 40% of the total weight of the ink composition. More preferably, the colorant content ranges from 1 to 10 weight percentages of the total weight of the ink composition.

As is discussed hereinabove, the component of the ink composition according to this example, which provides for enhanced durability of the images formed thereby is an agent that is capable of chemically interacting with the substrate. Preferably, such agent interacts with functional groups that are present within the substrate material and more preferably, which are present on its surface.

As used herein, the phrase "chemical interaction" describes a chemical reaction which takes place between two or more substances, and typically leads to a formation of a bond. The bond, in the case of the present disclosure, can be a covalent bond, a ionic bond, a hydrogen bond and the like and thus, the chemical interaction can involve, for example, nucleophilic and electrophilic substitutions, nucleophilic and electrophilic addition reactions, elimination reactions, cycloaddition reactions, rearrangement reactions, chelate formation, ionic complex formation, affinity-pair formation and any other known organic and inorganic reactions.

As used herein, the phrase "functional group" describes a chemical moiety that is capable of undergoing a chemical reaction that typically leads to a bond formation. The bond, in the case of the present disclosure, can be a covalent bond, a ionic bond, a hydrogen bond and the like. Representative examples of suitable functional groups according to this example include, without limitation, amine, amide, halide, hydroxyl, thiol, cyano, sulfonamide, carboxyl, thiocarbamate, urea and thiourea, as these terms are defined hereinafter. Preferably, the functional groups according to this example are those which are abundant and available for chemical interactions in the substances which compose the substrate onto which the image in printed. Such functional groups that are present within prevalent substrates typically include, without limitation, amine, amide, carboxyl, hydroxyl and thiol.

By chemically interacting with the substrate, this agent provides for improved adherence of the ink composition and thus ensures that the image formed by the ink composition would sustain washes, abrasion and other physical and chemical stress. Preferably, the chemical interaction involves cross-linking and the agent capable of interacting with the substrate is a cross-linking agent.

As used herein, the term "cross-linking" describes a chemical reaction that involves the formation of interconnecting links between various components and thus leads to the cross-wise formation of interconnecting links.

The phrase "cross-linking agent" as used herein thus refers to a chemical substance which has two or more reactive groups available for chemical interaction typically leading to bond formation, whereby these reactive groups participate in such a bond formation that leads to cross-linking between other chemical substances. Preferably the cross-linking agent has more than two reactive groups, enabling the cross-linking agent to form a branched mesh of interconnecting links.

The reactive groups on the cross-linking agent according to this example must be chemically compatible with the functional groups available on the surface of the substrate, and be reactive under mild condition at which printing and/or curing are performed. For example, in the case of a substrate with amine groups on its surface, a cross-linking agent with a carboxyl groups may form amide bonds with the substrate. Similarly, hydroxyl and/or thiol groups on the surface of the substrate will form bonds with cross-linking agents having amine groups, carboxyl groups, acyl-halide groups, aldehyde groups, isocyanate groups, as these terms are defined hereinbelow, and many other such functional groups which interact readily in mild conditions and/or mild heating.

Thus, the cross-linking agent can be, for example, an aldehyde-based cross-linking agent, an amine-based cross-linking agent, an isocyanate-based cross-linking agent, a carboxyl-based cross-linking agent, a silane based cross-linking agent, an acyl-halide cross-linking agent, a peroxide based cross-linking agent, an ester based cross-linking agent, an amide based cross-linking agent and a vinyl based cross-linking agent. Each of these cross-linking agents include one or more of the indicated functional group.

Aldehyde-based cross-linking agents are the most commonly used cross-linking agents in many industries due to their highly reactive profile under mild conditions and the relatively safe use thereof in industrial scale. For printing onto textile fabrics, aldehyde-based cross linking agents are particularly advantageous due to the abundant presence of hydroxyl groups on surfaces of textile fabrics.

However, the high reactivity of aldehyde-based cross-linking agents may oftentimes limit their use since ink compositions containing same may be unstable, and thus difficult to prepare, store, transfer and utilize or having short shelf-life.

As used herein, the term "amine" refers to an -NR'R" group where R' and R" are each hydrogen, alkyl, alkenyl, cycloalkyl, aryl, heteroaryl (bonded through a ring carbon) or heteroalicyclic (bonded through a ring carbon) as defined hereinbelow.

The terms "alkenyl" and "alkene" refers to an alkyl group which consists of at least two carbon atoms and at least one carbon-carbon double bond.

As used herein, the term "acyl-halide" describes a R'(C=O)X group wherein X is halide, as defined herein and R' as defined herein.

As used herein, the term "aldehyde" refers to an -C(=O)-H group.

As used herein, the term "amide" refers to both "C-amide" and "N-amide" whereas "C-amide" refers to a -C(=O)-NR'R" group, where R' and R" are as defined herein and "N-amide" refers to an -NR'C(=O)-R" group, where R' and R" are as defined herein.

As used herein, the term "carboxyl" refers to an -C(=O)OR' group, where R' is as defined herein.

The term "cyano" describes a -C=N group.

The term "hydroxyl" refers to a -OH group.

The term "isocyanate" describes an -N=C=O group.

The term "peroxide" refers to a -O-O-R' group, where R' is as defined herein.

The term "silane" describes a -O-Si-(OR')(OR")(OR"') group, where R', R" and R'" are as defined herein.

The term "sulfonamide" describes a -N-S(=O)₂-OR' group, where R' is as defined herein.

The term "thiocarbamate" describes a -O-(C=S)-NR'R" group, where R' and R" are as defined herein.

The term "thiol" refers to a -SH group.

The term "thiourea" describes an -NR'-C(=S)-NR"R"', with R', R" and R'" as defined herein.

The term "urea" describes an -NR'C(=O)-NR"R"', where R', R" and R'" are as defined herein

Exemplary types of aldehyde-based cross-linking agents include, without limitation, modified melamine formaldehyde based cross-linking agents, urea formaldehyde based cross-linking agents, glycoluril formaldehyde based cross-linking agents and benzoguanamine formaldehyde based cross-linking agents.

Exemplary modified melamine formaldehyde-based agents include, without limitation, methylated melamine formaldehyde, N-butylated melamine formaldehyde and isobutylated melamine formaldehyde. Preferably, a preferred modified melamine formaldehyde-based agent is a methylated melamine formaldehyde.

Exemplary urea formaldehyde based agent include, without limitation, methylated urea formaldehyde, N-butylated urea formaldehyde and isobutylated urea formaldehyde. Exemplary glycoluril formaldehyde based agent include, without limitation, N-butylated glycoluril formaldehyde and methylated/ethylated glycoluril formaldehyde. Exemplary benzoguanamine formaldehyde based agent include, without limitation, N-butylated benzoguanamine formaldehyde and methylated/ethylated benzoguanamine formaldehyde.

Preferably, the cross-linking agent content in the ink composition according to this example ranges from about 0.4 weight percentage to about 55 weight percentages of the total weight of the ink composition. More preferably, the cross-linking agent content ranges from about 5 weight percentages to about 25 weight percentages of the total weight of the ink composition.

It should be noted herein that some of the binding sites with which the wetting composition interacts so as to reduce the engagement of the ink composition therewith may also include functional groups that are present on the substrate surface. However, the chemical characteristics of the wetting composition described herein and the ink composition presented in this example are completely different and so do the interactions formed with the wetting composition and the ink composition.

The ink compositions according to this example further includes a catalyst.

The term "catalyst" as used herein describes a chemical substance which is capable of promoting, initiating and/or catalyzing the chemical reaction between the agent capable of chemically interacting with the substrate and the functional groups in the substrate. The catalyst is selected so to promote, initiate and/or catalyze the reaction upon contact of the ink composition with the substrate, optionally in combination with an external heat that is applied during the curing of the image.

Preferred catalysts according to this example are acid catalysts and more preferred are strong acid catalysts. Acid catalysts are suitable since they may catalyze most of the reactions described above between various functional groups on the substrate and reactive groups within, e.g., the various cross-linking agents described above.

The acid catalyst can be present in the ink composition either in its free form, or as a blocked catalyst, namely as a salt form thereof with a volatile basic counterion or as a complex with about 3% by weight of a low amine or about 15% by weight of a low alcohol present in the ink composition, whereby the amine or the alcohol serves as a volatile acid attenuating additive. The salt or the complex described above decomposes upon application of the composition onto the substrate and thus the reactive form of the catalyst is generated.

Preferably, the catalyst content in the ink composition of the present example ranges from about 0.01 weight percentage to about 15 weight percentages of the total weight of the ink composition. More preferably, the catalyst content ranges from about 0.1 to about 10 weight percentages of the total weight of the ink composition.

The term "polyol" describes a chemical substance that has two or more free hydroxyl groups, as this term is defined hereinbelow, and includes, for example, diols, a triols, tetraols, etc. Typical polyols are substances that include from about 50 to about 400 hydroxyl groups. Representative examples of a polyol include, without limitation, a polyester polyol, a polyether polyol, a urethane polyol, a polyester acrylate, an acrylic polyol, a urethane acrylic polyol, a polyester urethane triol resin, a polyvinyl butyral, a polyvinyl chloride acrylate and an oxidized castor oil.

Non-limiting examples of polyols that are suitable for use in the context of the present disclosure include ethylene glycol, diethylene glycol, triethylene glycol, polyethylene glycol, propylene glycol, dipropylene glycol, polypropylene glycol, butylene glycol, hexanediol, pentanediol, glycerin (glycerol), hexanetriol, and thioglycol.

The polyol content in the ink composition of the present example ranges from about 0.1 weight percentage to about 50 weight percentages of the total weight of the ink composition. Preferably, the polyol content in the ink composition ranges from 0.5 weight percentage to 30 weight percentages of the total weight of the ink composition and more preferably, the polyol content in the ink composition ranges from about 11 weight percentages to about 20 weight percentages of the total weight of the ink composition.

Each of the ink compositions described herein can further include one or more additional ingredient which may further modify the chemical and physical properties of the ink composition, and provide for improved performance of the formed image. Examples of such ingredients include, without limitation, non-reactive agents softeners/plasticizers, dispersing agents, surface active agents and conductivity agents (ionizable materials).

The above-described ink composition can be utilized in the process of the present disclosure by being applied after the application of the wetting composition. Utilizing such an ink composition by the process of the present disclosure produces images which are beneficially characterized by both the superior qualities stemming from the use of the wetting composition of the present disclosure, and the physical and chemical durability stemming from the use of such an ink composition.

However, a more preferred ink composition that can be utilized in the context of the present disclosure is a composition that comprises a colorant, a carrier, a polyol and an agent that is capable of chemically interacting with the substrate, as described hereinabove, whereby the wetting composition comprises a catalyst that promotes the chemical interaction, as described hereinabove.

Alternatively, a preferred ink composition that can be utilized in the context of the present disclosure is a composition that comprises a colorant, a carrier, a polyol and a catalyst, as described hereinabove, whereby the wetting composition comprises an agent that is capable of chemically interacting with the substrate, as described hereinabove.

By utilizing such ink compositions that are devoid of one of the reactive components (e.g., the catalyst or the agent capable of chemically interacting with the substrate) and a wetting composition that comprises this component, adverse reactions between the reactive components in the ink compositions are avoided and the ink composition can be more efficiently utilized.

The printing process of the present disclosure thus produces images with improved resolution, definition and brightness, as compared with the presently known printing technologies, and is particularly useful for printing multicolor images on absorptive and other surfaces. As is demonstrated in the Examples section that follows, by contacting the surface, prior to the formation of the image, with a suitable wetting composition, the feathering and bleeding of the ink dots one into the other is substantially reduced, the ink droplets exhibit a tight and symmetrical droplet shape when applied onto the wetted surface, higher optical density of ink on the surface is achieved (allowing printing of higher-resolution images), and the ink does not infiltrate to the back side of the surface. The use of a volatile solvent in the wetting composition allows for complete or substantially complete removal thereof, as is shown by the absence of noticeable traces of the wetting composition after the image is cured.

In summary, the images produced by the process of the present disclosure, are characterized by minimized ink absorption into the surface (e.g., minimized diffusion of ink to the back side of a thick layered surface); high and long-lasting color vividness; high resolution; and high durability.

The process described hereinabove can be performed on any desirable surface, using an appropriate printing machine. Thus, the surface can be a flat surface and a non-flat surface such as a curved surface or any uneven surface.

Further, the surface can be in a form of e.g., a film, a foil, a sheet or any other face of any three-dimensional object.

As is discussed in detail hereinabove, the process according to the present disclosure is particularly beneficial when the surface onto which the image is printed has undesirable characteristics which reduce the image quality. These characteristics include, for example, absorptiveness and high surface tension as compared with that of the ink, which lead to smearing of the ink composition and hence to reduced brightness and resolution.

Thus, the process according to the present disclosure is particularly beneficial when the surface is made of an absorptive material such as fibrous material and a porous material or a material characterized by high surface tension. Examples of such surfaces include, without limitation, textile fabrics, plastics, metals, glass, wood and rock.

The surface described above may form a part of a subject that is made of the same material or, alternatively, include one or more additional layers such as, for example, a paper layer, a foam layer, a textile fabric layer, a natural or synthetic rubber layer, a ceramic or glass layer, a resin layer and the likes, and any combination thereof.

As is further discussed in detail hereinabove, the process according to the present disclosure is particularly useful when the surface includes one or more fibrous materials, e.g., a textile fabric.

Textile fabrics that are suitable for use in the context of the present disclosure include, for example, woven fabrics, knitted fabrics, and non-woven fabrics such as felt fabrics.

The textile fabrics, according to the present disclosure, may include fibers from any animal, plant and/or synthetic source such as, for example, wool, silk, cotton, linen, hemp, ramie, jute, acetate, acrylic fabric, lastex, nylon, polyester, rayon, viscose, spandex, metallic composite, carbon or carbonized composite, and any combination thereof.

The printing process of the present disclosure is highly suitable for garments made of one or more textile fabrics, and therefore one of the examples is the use of this novel printing process on a piece of garment. An exemplary garment is a cotton T-shirt.

As described and discussed hereinabove, the printing process of the present disclosure and its novel principles is suitable for a variety of printing techniques using liquid inks on absorptive and glossy surfaces. One example for a highly compatible printing technique, with respect to the present disclosure, is digital inkjet printing directly on the subject surface.

Hence, the present disclosure further relates to a digital printing system for various substrates that permits accurate, high quality, high resolution, multi-color printing directly onto a substrate in a relatively simple system.

An example disclosed herein is useful for printing over materials that usually cause the ink to feather in the material of the surface, such as fibrous materials, porous materials and other ink absorbing materials, and materials having high surface tension with the ink liquid. An example is thus provided for the garment industry in general, and for T-shirt printing industry in particular.

An example comprises a pre-printing system for preparing a surface for printing an image thereon, including one or more controller-operated liquid applicator for applying the wetting composition of the present disclosure. This liquid applicator typically comprises an array of spraying nozzles operative to apply a wetting composition over the subject surface. Other types of liquid applicators may include dripping nozzles, droplet injectors, drop-on-demand piezoelectric inkjet nozzles, continuous piezoelectric inkjet nozzles, roller pads, stamping pads, offset printing stencils and a screen printing stencils. The controller(s) operates the liquid applicator(s) so as to apply the wetting composition on selected part(s) of the surface, as discussed hereinabove.

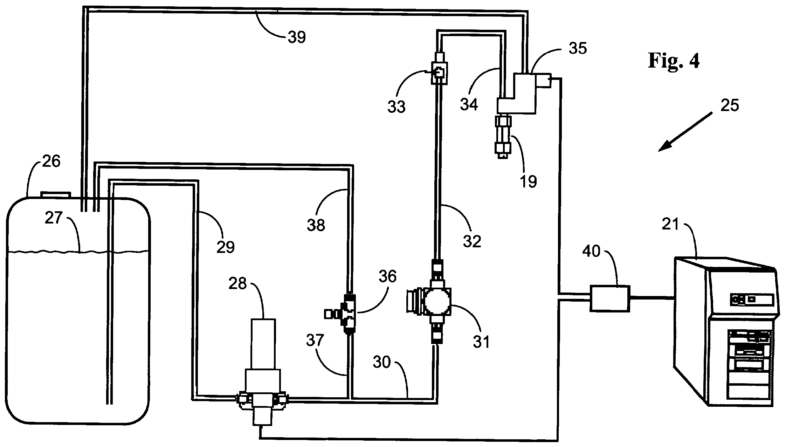

The pre-printing system of the present disclosure may be a stand alone apparatus, or a part of a complete printing system. The particulars of the pre-printing system, according to the present disclosure, are discussed in detail hereinbelow and in the figures (see, for example Figure 4).

Hence, there is provided herein a printing system which includes:
The pre-printing system described hereinabove;
a printing assembly comprising at least one printing head operative to apply ink on a printable medium; and

A controller unit for controlling the operation of the above assemblies, typically comprising a computer, preferably comprising a microcontroller, or a programmable logic controller (PLC), or a personal computer (PC) or any combination thereof.

The printing system may optionally further include a garment handling assembly; and further optionally, at least one curing assembly, operative to cure the ink composition and/or the wetting composition, and/or expedite the drying of the wetting composition.

Further optionally, the printing system includes at least one ironing assembly, operative to iron the garment prior to printing or wetting.

The abovementioned wetting assembly and printing assembly preferably comprise one or more units capable of applying liquid over selected areas of the surface to be printed. Such units can be, for example, spraying nozzles, dripping nozzles, droplet injectors, drop-on-demand piezoelectric inkjet nozzles, continuous piezoelectric inkjet nozzles, roller pads, stamping pads, offset printing stencil and a screen printing stencil, etc.

The abovementioned garment handling assembly preferably comprises an accurate X, Y, Z motion system and a printing table. Since the printing system is particularly suited to printing on a garment, it has been described herein with respect to garment printing, by way of example only. However, it will be appreciated that any other suitable substrate can alternatively be utilized.

An example of a digital printing system disclosed herein typically comprises electronically controlled wetting and printing units such as spraying nozzles, dripping nozzles, droplet injectors, drop-on-demand piezoelectric inkjet nozzles, continuous piezoelectric inkjet nozzles, etc. that are capable of creating image pixels in a controllable manner.

An example shown and described below comprises the combination of wetting by spraying technology and printing by inkjet technology. It is appreciated that the present disclosure pertains to every possible combination of wetting technology and printing technology.

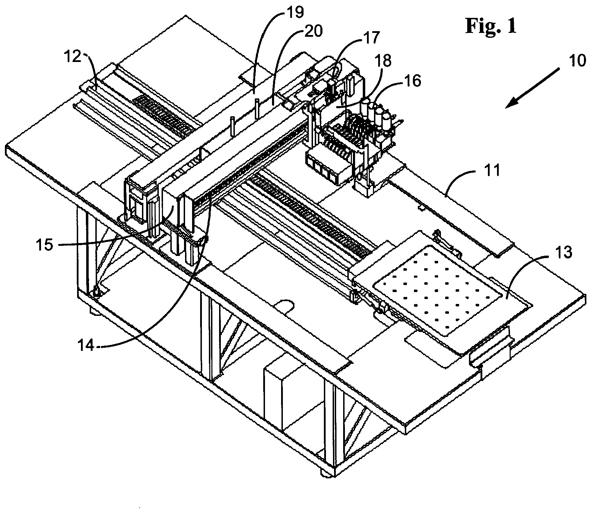

Reference is now made to Figure 1, which is a simplified perspective drawing of a garment printing system **10.** Garment printing system **10** comprises a rigid frame **11** in which an accurate linear motion X-axis stage **12** is installed. According to one example, X-axis stage **12** is a linear motor driven stage, and can be a conventional linear stage. Alternatively, X-axis stage **12** can be any other type of linear stage, like a belt-driven stage, or ball screw driven stage. A printing table assembly **13** is connected to X-axis stage **12,** which preferably provides high acceleration and scanning speed.

Perpendicular to the X-axis direction, an accurate linear motion Y-axis stage **14** is installed above printing table assembly **13,** preferably on a bridge **15.** X-axis **12** and Y-axis stages **14** are known in the art as linear stages, such as linear rails, like rails marketed by THK Co., Ltd., Tokyo, Japan, a linear encoder like that sold by RSF Elektronik Ges.m.b.H., Tarsdorf, Austria, and a moving plate supported on the rails. According to an example of the present disclosure, X-axis stage **12** is a linear motor driven stage, capable of high acceleration rate and stiffness, for example, Anorad brand model LW10 of Rockwell Automation, Shirley, New York, USA. Closed loop control is responsible for the high accuracy and motion smoothness. The position of printing table **13** along the rails of X-axis stage **12** is measured by a linear encoder, and is used also to determine the firing timing of the inkjet nozzles and the wetting nozzles. Y-axis stage **14** is preferably a linear motor stage similar to X-axis stage **12.**

A printing head **16,** preferably comprising a plurality of inkjet nozzles, is connected to a vertical Z-axis system **17,** which is preferably a ball screw driven stage. Z-axis stage **17** is supported on a Y-axis moving plate **18,** to allow motion perpendicular to the direction of movement of printing table **13.** The gap between the printing heads array **16** and the printed surface on printing table assembly **13** is an important parameter for high quality printing. Z-axis stage **17** enables movement of the printing heads array 16 in the vertical direction for calibration for different media heights.

It is appreciated that any other ink applying apparatus can be used for printing head **16,** such as a dripping nozzle, a droplet injector, a drop-on-demand piezoelectric inkjet nozzle, a continuous piezoelectric inkjet nozzle, a roller pad, an offset printing stencil and a screen printing stencil.

It is also appreciated that, while the system is particularly suited for printing on a finished garment, other printable media can alternatively be employed. The present disclosure will be described with regard to a finished garment, for ease of description by way of example.

Printing system **10** optionally comprises an ironing unit **19** and also optionally comprises a curing unit **20.** Ironing unit **19** is preferably supported on frame **11** above X-axis stage **12,** preferably on a bridge, such that printing table assembly **13** can move underneath. Ironing unit **19** prepares the media for printing, as will be further explained in detail below. Curing unit **20** is preferably supported on bridge **15** over rigid frame **11.** Alternatively, curing unit **20** can be mounted over a separate bridge in a similar manner to ironing unit **19.** According to one example, curing unit **20** is an infrared heating conveyor unit that evaporates the ink carrier and/or at least a part of the wetting composition as printing is accomplished or during print passes. According to another example curing unit **20** is a hot air blower. Alternatively, any other curing unit can be utilized, which is suited to the type of ink printed on the garment.

A main computer **21,** preferably a microprocessor, controls the entire system, and is coupled to each of the various units for coordination, synchronization, and activation, in accordance with a pre-programmed printing process. Main computer **21** coordinates a large number of functions. It receives images from an image file, processes the images to be printed, activates the curing unit, and controls the motion systems, the ironing unit, and more. Preferably, movement of the X-axis and the Y-axis stages is coordinated by the microprocessor with the nozzles firing command by a print heads controller, so that precise printing of a desired object or symbol can be performed. In an example, computer **21** is augmented with a programmable logic controller (PLC), later shown and described in accordance with Figure 4.

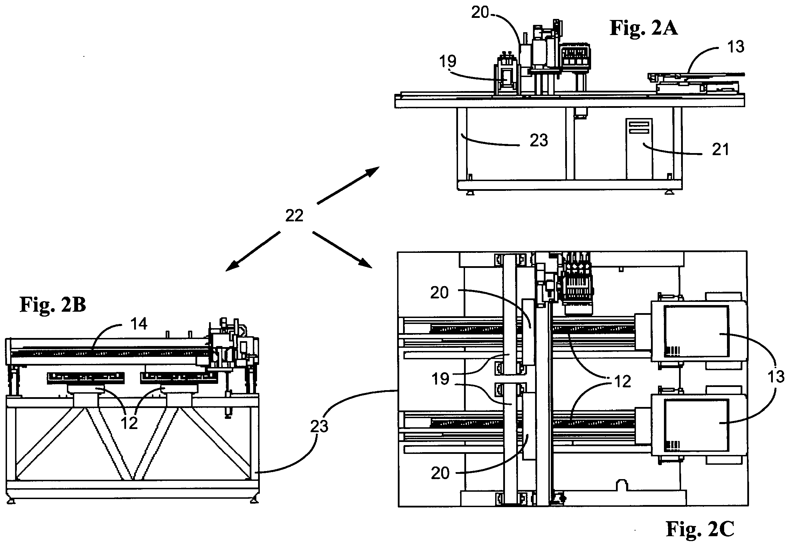

Reference is now made to Figures 2A, 2B, and 2C, which are respectively side, front and top simplified views of a garment printing system **22** constructed and operative in accordance with another example. Printing system **22** comprises a frame **23** that is wider than frame **11** shown in Figure 1, and two independent linear X-axis stages **13** are installed instead of one X-axis stage, as in the example described in Figure **1****.** Y-axis stage **14** described in Figures 2A, 2B and 2C is substantially the same as Y-axis stage 14 in Figure **1****.** Printing system **22** also comprises two curing units **20,** two ironing units **19** and two printing table assemblies **13.** It is a particular feature of the present example that the two X-axis stages **12** operate independently from one another. Thus, the process of loading and unloading can be carried out on one printing assembly at the same time that printing is being carried out on the second printing assembly. As a result, the printing heads array is working substantially continuously, dramatically improving throughput of the system. Each table can be accessed from the same edge of the system, thereby permitting a single worker to operate two printing assemblies. Main computer **21** controls both X-axis stages for independent operation.

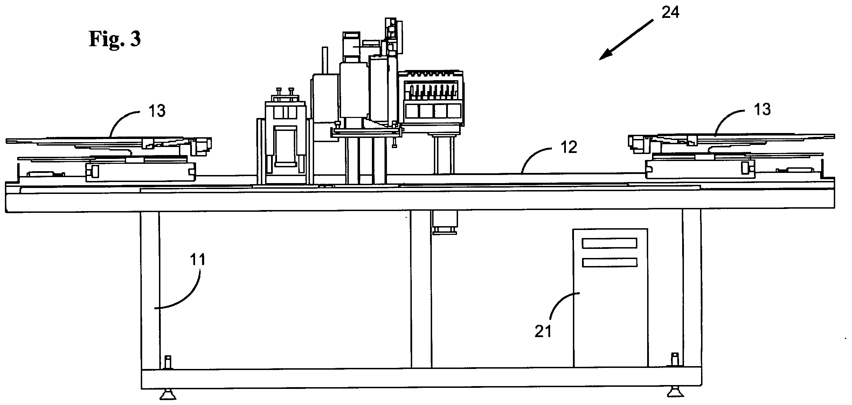

Reference is now made to Figure 3, which is a side view of a printing system **24** according to a yet another example. The printing system 24 comprises a frame 11, which is the same as frame 11 shown in Figure 1 and two independently movable printing table assemblies **13** mounted on the same X-axis stage **12.** Printing table assemblies **13** are capable of moving back and forth independently of one another. Printing is performed on one printing table **13** while at the same time garments are unloaded and loaded on the second printing table. Each printing table **13** is accessed from the opposite edge of the system, and is loaded and unloaded by a different operator. Main computer **21** controls both printing tables.

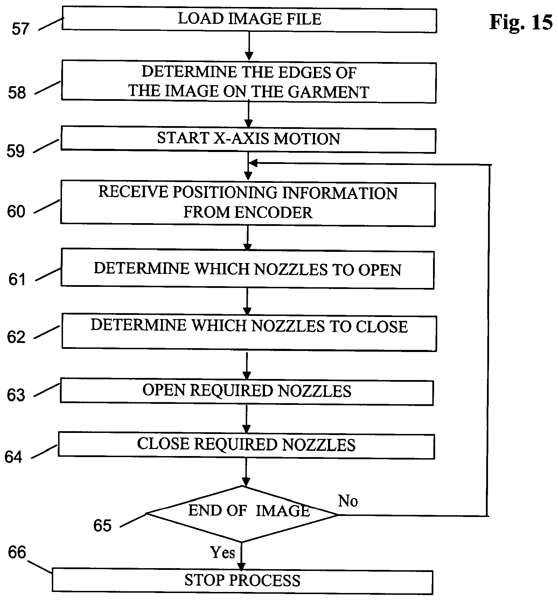

Reference is now made to Figure 4, which is a schematic illustration of a wetting system **25** constructed and operative in accordance with one example to apply the wetting composition to part(s) of the surface of the printable medium. Wetting system **25** can be added to a printing system, such as the printing systems **10, 22** and **24** described above. In an example, wetting system **25** comprises a tank **26** containing the wetting composition **27,** a pump **28** connected to tank **26** through a pipe **29** and operative to pump wetting composition **27** from tank **26** to spraying nozzle **19** via pipe **30,** a pressure regulator **31,** a pipe **32,** a manifold **33,** a pipe **34** and a solenoid valve **35.** An overflow needle valve **36** is operative to carry excess wetting composition back to tank **26** via pipes **37** and **38.** A pipe **39** is also operative to carry overflow wetting composition from solenoid valve **35** to tank **26.** Preferably, a plurality of solenoid valves **35** and spraying nozzles **19** are constructed to form a battery of spraying nozzles as will be described below. When wetting is initiated, as will be described below, computer **21,** preferably with the aid of a programmable logic controller (PLC) **40,** activates pump **29,** and then solenoid valve **35,** to inject streams of wetting composition **27.** In an example shown and described in accordance with Figures 4 and 15, the role of the PLC is to translate the commands effected by computer **21** into electrical activation to the relevant components. A detailed description of the computer **21** procedure to operate wetting system **25** is further shown and described below with reference to Figure 15.

As discussed in length hereinabove, it is appreciated that the wetting of the garment with the wetting composition of the present disclosure prior to printing, limits the penetration of the ink droplets into the garment so that a larger amount of ink remains on the external, visual, layers of the fabric and do not bleed, and thus the printing head is capable of creating smaller dots of ink. Therefore the printed image has a higher quality, through higher resolution and stronger, more vivid colors.

It is also appreciated that the method and the apparatus for wetting the garment with the wetting composition of the present disclosure can alternatively be used to coat any other surface that is capable of absorbing the ink, or that has a relatively high surface tension or glossy finish, so as to limit the bleeding of the ink through, or over, the surface.

It is further appreciated that spraying nozzle **19** can be replaced by other means for applying liquid onto a surface, such as a dripping nozzle, a droplet injector, a drop-on-demand piezoelectric inkjet nozzle, a continuous piezoelectric inkjet nozzle, a roller pad, an offset printing stencil and a screen printing stencil.

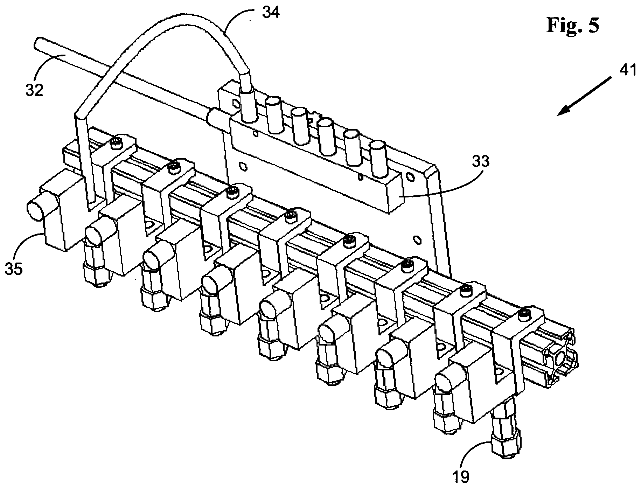

It is additionally appreciated that the printing head **16** can be replaced by other means for applying ink onto a surface, such as a dripping nozzle, a droplet injector, a drop-on-demand piezoelectric inkjet nozzle, a continuous piezoelectric inkjet nozzle, a roller pad, an offset printing stencil and a screen printing stencil, in any possible combination of wetting technology and printing technology. Non-limiting examples of such combinations include wetting using dripping and printing using drop-on-demand piezoelectric inkjet nozzle; wetting using roller pad and printing using continuous piezoelectric inkjet nozzle; wetting using spraying and printing using screen printing stencil; and wetting using droplet injector and printing using inkjet nozzle. Reference is now made to Figure 5, which is a perspective drawing of a battery **41** of solenoid valves **35** and spraying nozzles **19,** constructed and operative in accordance with one example. Solenoid valves **35** are each connected via pipe **34,** manifold **33** and pipe **32** to pressure regulator **31** (not shown in this figure).

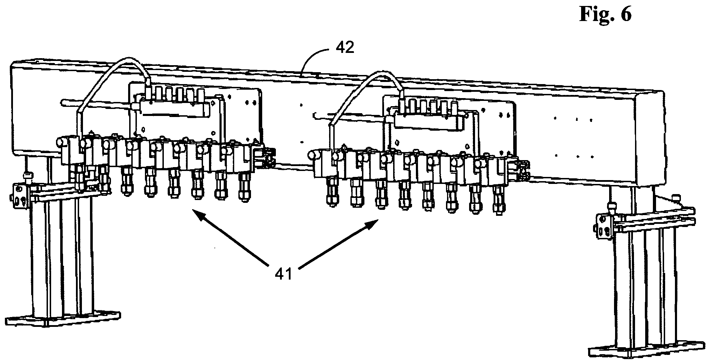

Reference is now made to Figure **6****,** which is a perspective drawing of two batteries **41,** mounted over a bridge **42** constructed and operative in accordance with one example. It is appreciated that alternatively batteries **41** can be mounted on bridge **15** of Figure 1, 2A, 2B and 2C, preferably at the opposite side of printing head **16.**

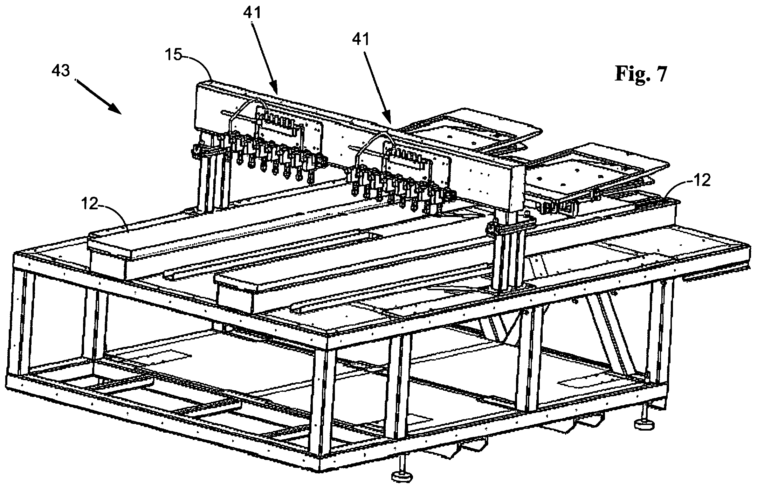

Reference is now made to Figure 7, which is a simplified perspective drawing of a printing system **43** constructed and operative in accordance with one example. Printing system **43** is an improvement of the printing systems **10, 22** and **24** as shown and described in accordance with Figures 1, 2A, 2B, 2C and 3 by adding pre-printing wetting assembly **25.** For simplicity, printing system **43** is shown and described as an improvement of the twin axis printing system **22** shown and described in accordance with Figures 2A, 2B, 2C. Figure 7 shows two batteries **41** mounted over bridge **15,** each battery over its respective X-axis **12.** Each battery **41** is operative, separately and independently, to spray a wetting composition over the garment prior to printing, and optionally subsequently to the printing, as will be described below.

After mounting the garment on printing table **13,** as will be described in further details below, the operator instructs computer **21** to start the printing process. Computer **21,** with the aid of PLC **40,** moves printing table **13,** under battery **41,** until one edge of the area to be printed is placed directly below battery **41.** Then computer **21** and PLC **40** operate the adequate spraying nozzles **19,** while moving printing table **13** beneath, until at least a part of the area to be printed is wetted. At this stage the garment is ready for printing and printing table **13** is moved under printing head **16** to commence printing as will be described below.

It is appreciated that the operation of selected spraying nozzles **19** while moving the garment below enables the wetting of only selected, and optionally predetermined areas of the garment, particularly those areas to be printed, while other areas are left intact.

Optionally computer **21,** with the aid of PLC **40,** operate curing assembly **20** while moving the printing table underneath, to cure, at least partially, the optionally included additional agents in the wetting composition, prior to printing.

It is appreciated that wetting assembly **25,** as well as printing system **43,** can be easily modified for printing objects other than garments.

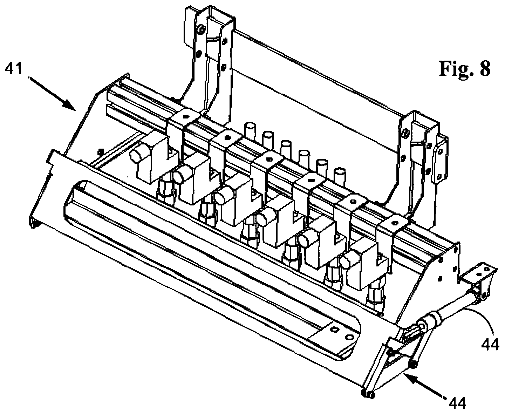

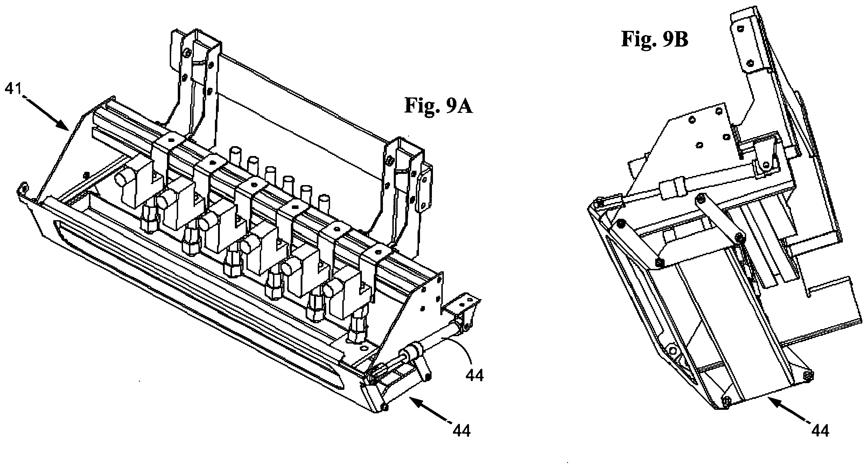

Reference is now made to Figures 8, 9A and 9B, which are all simplified perspective drawings of an example of battery **41** equipped with a bath **44,** constructed and operative in accordance with one example. Bath **44** contains a thinner liquid, and is operative to dip the tips of spraying nozzles **19** in this thinner liquid when the spraying nozzles are not spraying, as can be seen in Figure 8. Before spraying is initiated, computer **21** activates the solenoid **45** to move bath **44** and expose the tips of spraying nozzles **19,** as can be seen in Figures 9A and 9B.

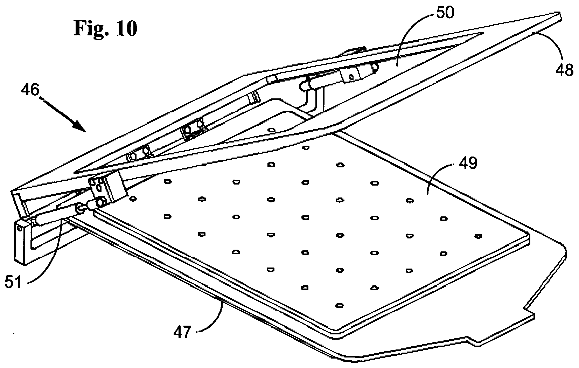

Reference is now made to Figure 10, which is simplified perspective drawings of an example of a garment mounting assembly **46,** which is a part of printing table **13,** constructed and operative in accordance with one example. Garment mounting assembly **46** comprises a media-holding plate **47** and an openable cover **48.** Preferably, media-holding plate **47** includes a raised portion **49** of the same size as the image to be printed, and cover **48** includes a window **50** of the same shape as raised portion **49.** Preferably, window **50** is slightly larger in size, preferably a few millimeters, than raised portion **49.** Cover **48** is held in an open position by two gas cylinders **51,** as known in the industry. Preferably, at least part of the printing table assembly, for example raised portion **40,** is a vacuum table, to allow holding of nonporous media such as paper, boards, plastic etc.

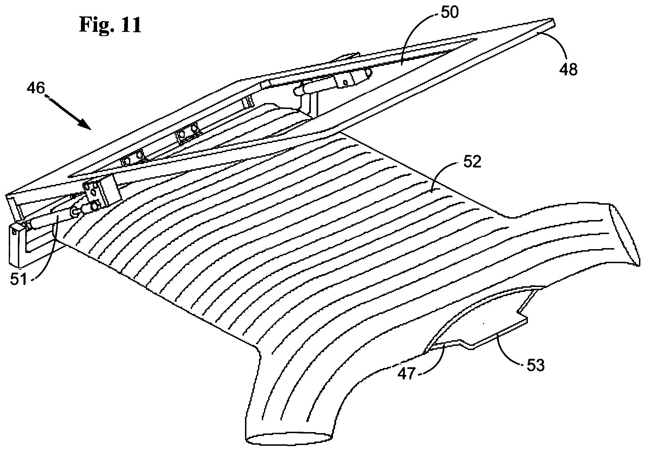

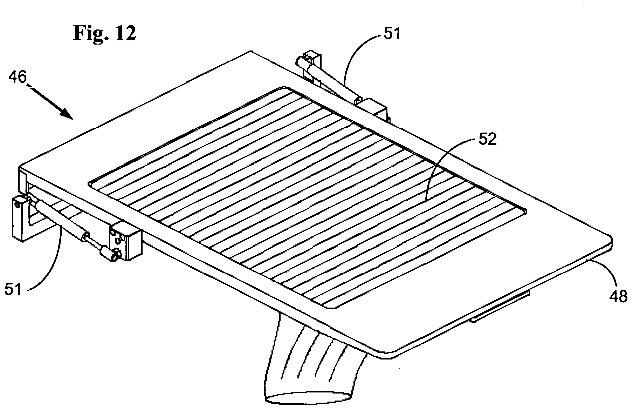

Reference is now made to Figure 11 and 12, which are simplified perspective drawings of garment mounting assembly **46,** with a mounted garment, in an opened and closed positions, constructed and operative in accordance with one example. Figure 11 shows a garment **52** loaded onto garment mounting assembly **46.** Garment **53** is loaded manually onto the media-holding plate, as the plate's chamfers **53** center the garment on the plate. As can be seen in Fig 12, after garment **53** is loaded onto the media-holding plate, cover **48** is closed against the media-holding plate, while gas cylinders **51** urge the cover to the closed orientation. The edges of the garment are stretched slightly by the cover surface that touches the table's lower surface around the raised portion. As a result, the garment is held firmly in place to allow high-resolution printing (i.e., there is substantially no movement of the media during printing or wrinkling).

According to another example, the garment mounting assembly is a simple, flattened plate, made of aluminum or wood on which a textile piece or a garment is positioned. Flattened plates are well known by those who are familiar with the garment printing industry.

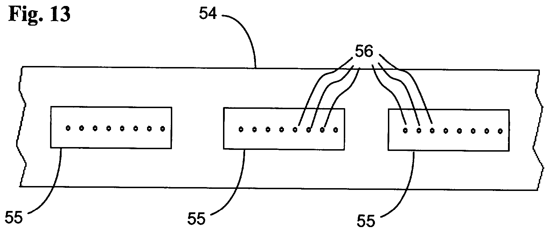

Reference is now made to Figure 13, which is a simplified schematic drawing of an inkjet printing head assembly **54,** constructed and operative in accordance with one example. Printing head assembly **54** comprises an array of printing heads **55,** arranged for printing directly on a finished garment, a textile piece or other flexible or rigid medium. Each printing head **55** comprises at least one inkjet nozzle **56.** Printing head **55** can be any conventional printing head, such as those marketed by Spectra, Inc., New Hampshire, USA and others known in the industry.

According to one example, printing heads assembly **54** is a massive array of conventional piezoelectric drop-on-demand or continuous inkjet heads, which perform the high-speed printing. It is a particular feature of the present disclosure that at least a 500, and preferably several thousands (i.e., 2,000) nozzles are provided for simultaneous printing, resulting in a very quick and accurate process. Each printing head **55** consists of dozens of nozzles **56** that are controlled independently by main computer **21,** optionally via PLC **40.**

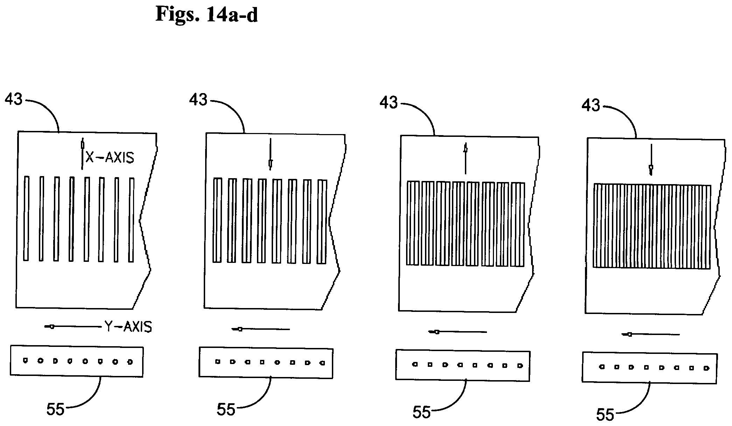

Reference is now made to Figures 14A, 14B, 14C and 14D, which, taken together, are simplified schematic illustration of several stages of the printing process, according to an example. Figures 14A, 14B,14C and 14D, show four consecutive passes of a part of a garment, such as garment **53** shown in Figure 12, under a single print head, such as print head **56** of Figure 13.

According to an example, the distances between nozzles and between printing heads are bigger than the printing resolution, hence several print passes are needed to complete the image. After each pass in the X-axis, here created by movement of the printing table assembly with media **53,** printing head **55** moves incrementally in the Y-axis to prepare for the next pass. It will be appreciated that computer **21** is programmed to control the relative motion of the printing heads and the printing table assembly so as to obtain this accurate and complete coverage.

The printing process is performed while relative motion occurs between the printing heads array **55** and the printing table assembly. At least two axes of motion are needed for this multi-color printing: X-axis motion that is in the printing direction; and Y-axis motion that is perpendicular to the printing direction. As stated above, the distances between nozzles and between printing heads are bigger than the printing resolution, hence several print passes are needed to complete the image. This is accomplished by moving the printing table assembly back and forth along the X-axis while moving the heads array perpendicular to the line of printing. The X-axis is the printing line and the Y-axis is the line on which the printing heads array moves after each pass to fill the gaps between printed lines in the next pass. Multicolor printing is performed as the table surface passes below the drop-on-demand inkjet nozzles array.

According to an alternative example, the Y-axis is the fast-moving axis, while the X-axis moves incrementally to permit filling in of the gaps between printed lines.

A printing command is sent by the printing heads driver (not shown) to each nozzle at the exact time and location for ink firing. The printing command is actually an electronic pulse, with exact width, voltage level, rise time and decay time. Printing heads drivers are commercial systems known in the industry, such as Inca drivers, of Inca Digital Printers, Cambridge, England. When printing is completed, the printing table is moved to a loading position. Then, the printed garment is unloaded and a new garment is loaded onto the printing table.

Reference is now made to Figure 15, which is a simplified flow chart of the process of wetting the garment prior and optionally subsequent to printing, preferably executed by computer **21.** The process of wetting the garment with the wetting composition starts with element **57** by loading the image file from the computer's storage. The process progresses to element **58** to determine the edges of the image on the garment, which are also the edges of the area to be wetted. The process continues to element **59** to activate X-axis **12,** which moves printing table **13.** The process advances to element **60** to receive from the encoder the position data of printing table **13.** The process proceeds to element to determine which nozzles to open (element **61**) or close (element **62**) and sends the appropriate commands (elements **63** and **64**) to nozzle solenoids **35,** preferably via PLC **40.** When the other edge of the image is reached (element **65**) the process is stopped (element **66**).

The printing system of the examples described above incorporates the following process of loading and unloading garments, while optionally ironing at least the area onto which the image in printed on.

The process according to the present invention includes the processes of wetting at least a part of the area of the garment to be printed by contacting it with a wetting composition as described hereinabove;
forming an image by applying an ink composition over the wetted area of the mounted garment;
optionally re-wetting the area onto which the image is printed; and curing the image.

In order to increase the throughput of the system, these processes can be performed in parallel.

Additional objects, advantages, and novel features of the present invention will become apparent to one ordinarily skilled in the art upon examination of the following examples. Additionally, each of the various embodiments and aspects of the present invention claimed in the claims section below finds experimental support in the following examples.

Reference is now made to the following examples, which together with the above descriptions; illustrate the invention in a non limiting fashion.

In all the Examples below, a "Kornit 930" or a "Kornit 931" digital printing machine (manufactured by Kornit Digital Ltd., Israel) and equipped with a wetting system for applying the wetting composition, as described hereinabove, were used.

Printing was typically performed on the surface of a 100% cotton textile T-shirt. Similar tests were also performed on a surface of 50% cotton and 50% polyester, yielding the same results.

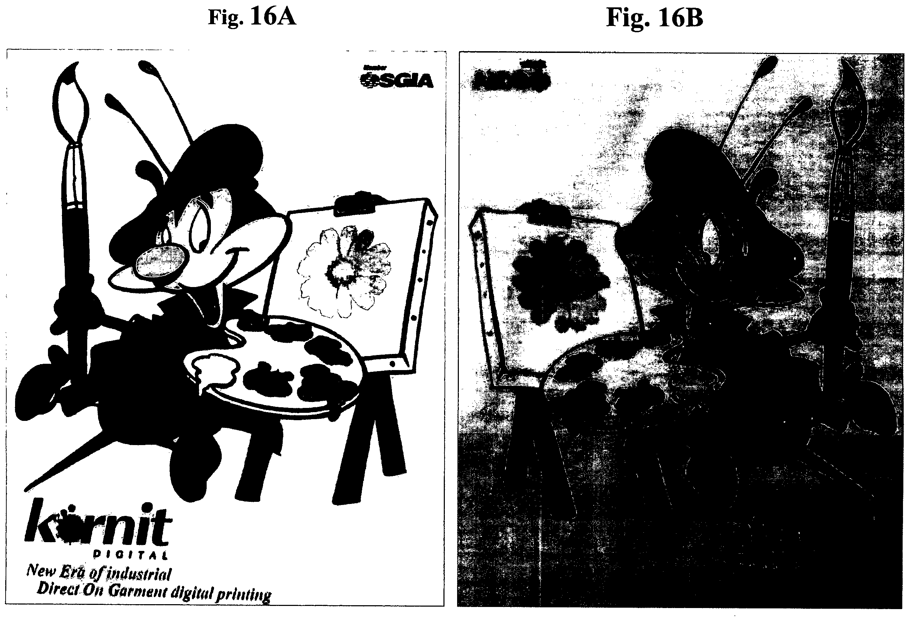

In Example 1, a non-aqueous solvent-based ink compositions, having the four basic formulations of cyan, magenta, yellow and black colors (CMYK) were used. A 100% cotton shirt was mounted onto the machine, as described above, and a multicolor image was directly printed on the fabric surface using an inkjet printing heads. The printed image was then subjected to curing, by heating to 150-180 °C for 180 seconds using an infrared curing unit. Figures 16A and 16B present photographs of the front side (Figure 16A) and the back side (Figure 16B) of the printed shirt and demonstrate the dullness of the obtained image and the colors bleeding (especially that of the cyan) obtained on the front side, and the high absorption of the ink in the fabric, as shown by the significant infiltration of the ink through the fabric and to the back side of the shirt.

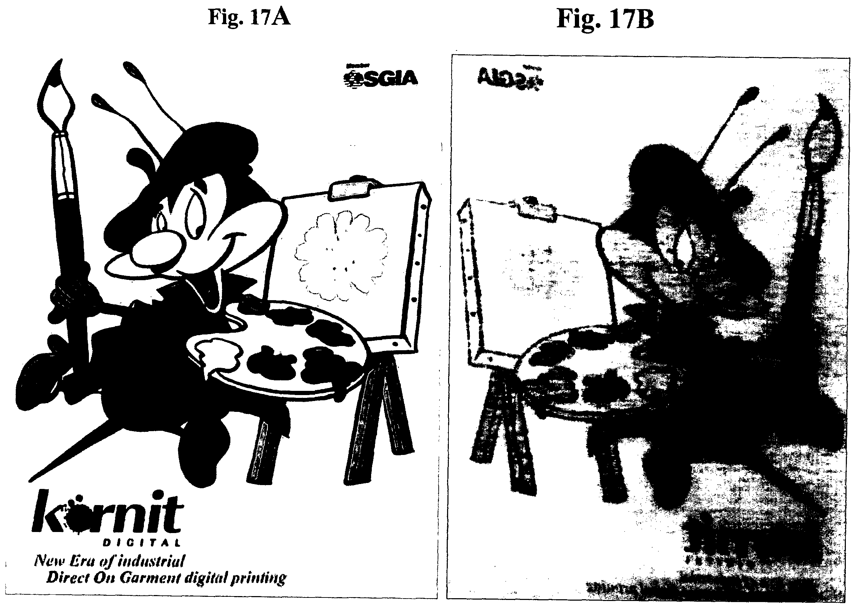

In Example 2, the same ink composition as in the first example was used for printing the same image, upon wetting the cotton shirt with an exemplary wetting composition according to the present disclosure. Thus, a 100% cotton shirt was mounted onto the machine, as described above. 100% isopropanol was uniformly applied onto an area of the cotton fabric, using a spraying nozzle, at a density of 0.25 grams per cm² area of the cotton fabric. Immediately thereafter, while the cotton fabric was still wet with the isopropanol, the image was printed on the wet area of the shirt surface using an inkjet printing head and the ink composition described above. The printed image was then subjected to curing, by heating to 150-180 °C for 180 seconds using an infrared curing unit. Figures 17A and 17B presents photographs of the front side (Figure 17A) and the back side (Figure 17B) of the printed shirt, and clearly demonstrate the superior brightness of the obtained image and the absence of visible adverse bleeding of the colors (Figure 17A), as compared with the image obtained without applying the wetting composition (see, Figure 16A), as well as the significantly reduced infiltration of the ink through the fabric to the back side of the shirt, as compared with that obtained without applying the wetting composition (see, Figure 16B), and thus clearly demonstrate the superior quality of the image obtained by the printing process of the present disclosure.

In Example 3, a non-aqueous solvent-based ink composition having the four basic formulations of cyan, magenta, yellow and black colors (CMYK) was used. A 100% cotton shirt was mounted onto the machine, as described above, and a multicolor image of squares of each color formulation was directly printed on the fabric surface using an inkjet printing heads. The printed image was then subjected to curing, by heating to 150-180 °C for 180 seconds using an infrared curing unit. In a parallel test, the same process was repeated while uniformly applying 100% isopropanol onto an area of the cotton fabric prior to applying the ink formulations, as described hereinabove in Example 2. The optical density of each of the colored squares, in each of the printed shirts (with and without pre-treatment with a wetting composition according to the present disclosure) was measured, using Shamrock Color Print 415. Table 1 below presents the optical densities values that were recorded and clearly show the higher values obtained following pre-treating the fabric with a wetting composition according to the present disclosure.

**Table 1**

| Color | Optical density without a wetting composition (OD) | Optical density with a wetting composition (OD) |
|---|---|---|
| Cyan | 1.25 | 1.40 |
| Magenta | 0.95 | 1.20 |
| Yellow | 0.75 | 0.90 |
| Black | 1.25 | 1.40 |

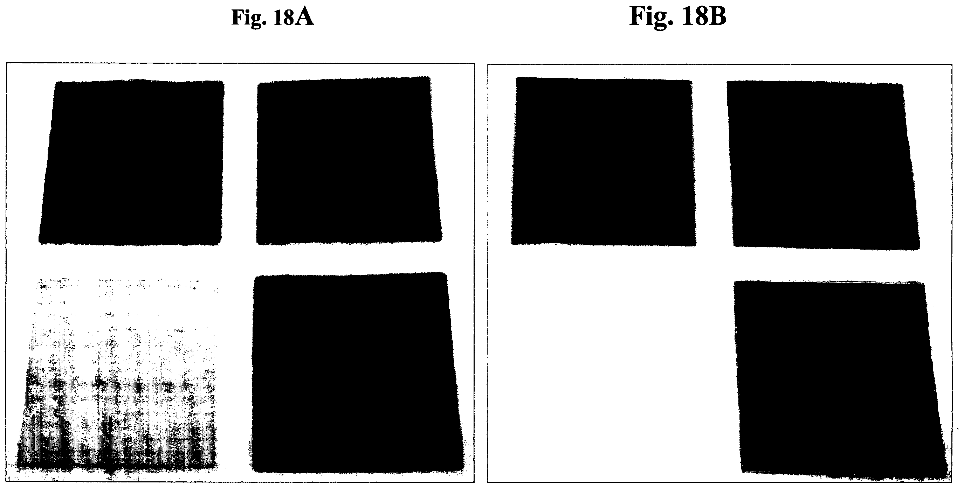

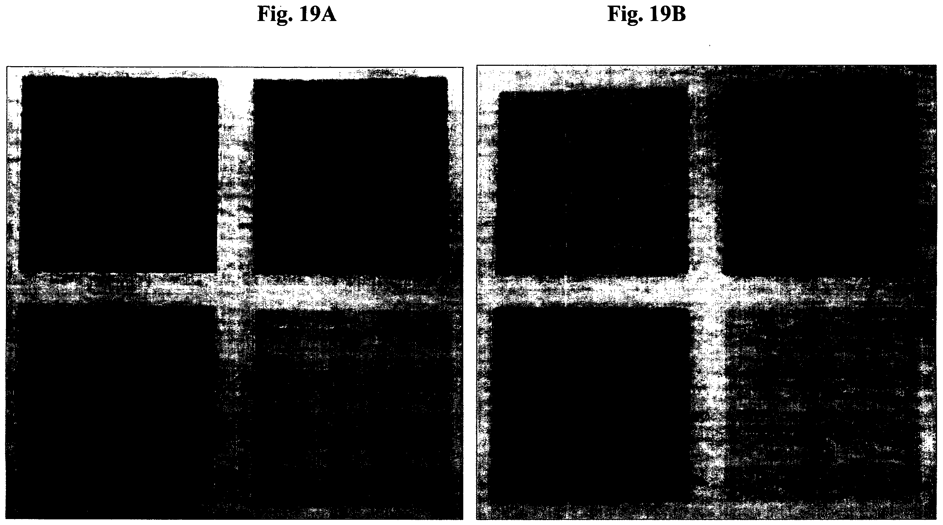

Figures 18A and 18B present side by side photographs of the front sides of a shirt printed without applying a wetting composition (Figure 18A) and of a shirt printed after applying a wetting composition (Figure 18B), and further demonstrate the improved brightness, definition and vividness of the image obtained on a fabric pre-treated with a wetting composition. Figures 19A and 19B present side by side photographs of the back sides of a shirt printed without applying a wetting composition (Figure 19A) and of a shirt printed after applying a wetting composition (Figure 19B), and further demonstrate the significantly reduced ink infiltration to the back side of the fabric upon pre-treating the shirt with a wetting composition and thus further demonstrate the beneficial modification of the surface characteristic of the printed object achieved by applying the wetting composition.

In Example 4, which forms an embodiment of the present invention, the following non-aqueous solvent-based ink composition was used:
Ethylene glycol butyl ether acetate (EGBEA) 80.0 grams;
Cyclohexanone 4.0 grams;
Dipropylene glycol methyl ether (DPM) 10.0 grams; and
Microlith Black preparation 6.0 grams.

A spraying nozzle attached to the printing machine was used to uniformly apply the wetting composition onto the subject surface. A 100% cotton fabric was mounted onto the machine, as described above. 100% butanol was uniformly applied onto an area of the cotton fabric, using the spraying nozzle, at a density of 0.40 grams per cm² area of the cotton fabric. Immediately thereafter, while the cotton fabric was still wet with the butanol, an image was printed on the wet area of the fabric surface using an inkjet printing head and the ink composition described above. The printed fabric was then subjected to curing, by heating to 150-180 °C for 180 seconds using an infrared curing unit. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 5, which forms another embodiment of the present invention, the following non-aqueous solvent-based ink composition was used:
Ethylene glycol butyl ether acetate (EGBEA) 80.0 grams;
Cyclohexanone 4.0 grams;
Dipropylene glycol methyl ether (DPM) 10.0 grams; and
Microlith Black preparation 6.0 grams.

A spraying nozzle attached to the printing machine was used to uniformly apply the wetting composition onto the subject surface. A 100% cotton fabric was mounted onto the machine described above. A mixture of 97% isopropanol and 3% SCX 8383 acrylic emulsion (Johnson Polymers) was uniformly applied onto an area of the cotton fabric, using the spraying nozzle, at a density of 0.40 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, by heating to 150-170 °C for 60 seconds using an infrared curing unit. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 6, the following non-aqueous solvent-based ink composition was used:
Ethylene glycol butyl ether acetate (EGBEA) 80.0 grams;
Cyclohexanone 4.0 grams;
Dipropylene glycol methyl ether (DPM) 10.0 grams; and
Microlith Black preparation 6.0 grams.

A pipette was used to uniformly apply the wetting composition onto the subject surface. A 100% cotton fabric was mounted onto the machine described above. 100% petroleum ether (80-100) was uniformly applied onto an area of the cotton fabric, using the pipette, at a density of 0.40 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, by heating to 150 - 170 C° for 150 seconds using an infrared curing unit. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 7, the following aqueous-based ink composition was used:
Cymel 323 (Cytec Industries) 30.0 grams;
Polyethylene glycol 35,000 (Sigma-Aldrich) 4.0 grams;
Nacure 2501 (King Industries) 2.0 grams;
Dipropylene glycol methyl ether (Dow Chemicals) 15.0 grams;
Isopropanol 5.0 grams;
Distilled water 40.0 grams; and
Spectra fix red 195 (Spectra Colors Group) 4.0 grams.

A 100% cotton fabric was mounted onto the machine described above. 100% ethylene glycol butyl ether acetate (EGBEA) was uniformly applied onto an area of the cotton fabric, using a spraying nozzle, at a density of 0.60 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, by heating to 150 - 180 C° for 180 seconds using an infrared curing unit. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 8, the following aqueous-based ink composition was used:
Cymel 323 (Cytec Industries) 30.0 grams;
Polyethylene glycol 35,000 (Sigma-Aldrich) 4.0 grams;
Nacure 2501 (King Industries) 2.0 grams;
Dipropylene glycol methyl ether (Dow Chemicals) 15.0 grams;
Isopropanol 5.0 grams;
Distilled water 40.0 grams; and
Spectra fix red 195 (Spectra Colors Group) 4.0 grams.

A 100% cotton fabric was mounted onto the machine described above. 100% cyclohexanone was uniformly applied onto an area of the cotton fabric, using a spraying nozzle, at a density of 0.60 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, by heating to 150 - 180 C° for 180 seconds using an infrared curing unit. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 9, the following non-aqueous solvent-based ink composition was used:
Ethylene glycol butyl ether acetate (EGBEA) 80.0 grams;
Cyclohexanone 4.0 grams;
Dipropylene glycol methyl ether (DPM) 10.0 grams; and
Microlith Black preparation 6.0 grams.

A 100% cotton fabric was mounted onto the machine described above. 100% ethanol was uniformly applied onto an area of the cotton fabric, using the spraying nozzle, at a density of 0.40 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, as described above. Compared to a similar image printed on a similar fabric using the same print-head and ink composition, but without the pre-wetting step, the image resulting after applying the above wetting composition displayed no visible feathering signs. The optical density of the image was higher, and less ink was transferred to the back side of the fabric.

In Example 10, the following non-aqueous solvent-based ink composition was used:
Ethylene glycol butyl ether acetate as a carrier, 60%
Propylene glycol monomethyl ether acetate as a carrier, 15%
Orasol dye as a colorant, 3%; and
Modified melamine-formaldehyde resin (such as Cymel 325), 11%
Polyester polyol (such as K-Flex XM-A307 by King Industries), 11%

A 100% cotton fabric was mounted onto the machine described above. A wetting composition composed of 90% isopropyl alcohol and 10% blocked p-toluenesulfonic acid was uniformly applied onto an area of the cotton fabric, using the spraying nozzle, at a density of 0.40 grams per cm² area of the cotton fabric. Immediately thereafter, while the cotton fabric was still wet with the wetting composition, an image was printed on the wet area of the fabric surface using an inkjet printing head and the ink composition described above. The printed fabric was then subjected to curing, as described above.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art within the scope of the appended claims.

## Claims

1. A process of digital inkjet printing an image directly on a 100% cotton fabric surface, the process comprising:
contacting at least a part of the surface with a wetting composition so as to provide a wet part of the surface;
applying a liquid ink composition, by an inkjet printing head, on said wet part of the surface, so as to form an image on said part of the surface; and
curing the image subsequent to said applying;
wherein said contacting is effected in-line of said applying by means of a spray nozzle liquid applicator;
**characterised in that** the ink composition comprises 80% by weight ethylene glycol butyl ether acetate, 4% by weight cyclohexanone, 10% by weight dipropylene glycol methyl ether, and 6% by weight Microlith Black preparation; and
**in that**:
(a) the wetting composition is 100% butanol and is applied at a density of 0.4 g/cm², and the curing takes place at a temperature between 150°C and 180°C for 180 seconds by means of an infrared curing unit; or
(b) the wetting composition comprises 97% isopropanol and 3% SCX 8383 acrylic emulsion and is applied at a density of 0.4 g/cm², and the curing takes place at a temperature between 150°C and 170°C for 60 seconds by means of an infrared curing unit.

2. The process of claim 1, further comprising, subsequent to said applying said liquid ink composition:
re-contacting said part of the surface with said wetting composition.

3. The process of claim 1, wherein said surface is a garment made of said textile fabric.

## Patentansprüche

1. Vorgang zum digitalen Tintenstrahldrucken eines Bildes direkt auf eine Stoffoberfläche aus 100 % Baumwolle, wobei der Vorgang Folgendes umfasst:
Inberührungbringen wenigstens eines Teils der Oberfläche mit einer Befeuchtungszusammensetzung, um einen befeuchteten Teil der Oberfläche bereitzustellen;
Auftragen einer flüssigen Tintenzusammensetzung durch einen Tintenstrahldruckkopf auf den befeuchteten Teil der Oberfläche, um ein Bild auf dem Teil der Oberfläche auszubilden; und
Härten des Bildes anschließend an das Auftragen;
wobei das Berühren linear zu dem Auftragen mittels eines Sprühdüsenflüssigkeitsapplikators bewirkt wird;
**dadurch gekennzeichnet, dass** die Tintenzusammensetzung 80 Gew.-% Ethylenglycolbutyletheracetat, 4 Gew.-% Cyclohexanon, 10 Gew.-% Dipropylenglycolmethylether und 6 Gew.-% Microlith Black-Zubereitung umfasst; und
wobei:
(a) die Befeuchtungszusammensetzung 100 % Butanol ist und mit einer Dichte von 0,4 g/cm² aufgetragen wird und das Härten bei einer Temperatur zwischen 150 °C und 180 °C 180 Sekunden lang mittels einer Infrarot-Härtungseinheit erfolgt; oder
(b) die Befeuchtungszusammensetzung aus 97 % Isopropanol und 3 % SCX 8383 Acrylemulsion besteht und mit einer Dichte von 0,4 g/cm² aufgetragen wird und das Härten bei einer Temperatur zwischen 150 °C und 170 °C 60 Sekunden lang mittels einer Infrarot-Härtungseinheit erfolgt.

2. Vorgang nach Anspruch 1, der ferner, anschließend an das Auftragen der flüssigen Tintenzusammensetzung, Folgendes umfasst:
erneutes Inberührungbringen des Teils der Oberfläche mit der Befeuchtungszusammensetzung.

3. Vorgang nach Anspruch 1, wobei die Oberfläche ein Kleidungsstück ist, das aus dem Textilgewebe hergestellt ist.

## Revendications

1. Procédé d'impression à jet d'encre numérique d'une image directement sur une surface de tissu 100 % coton, le procédé comprenant :
la mise en contact d'au moins une partie de la surface avec une composition d'humidification de manière à fournir une partie humide de la surface ;
l'application d'une composition d'encre liquide, par une tête d'impression à jet d'encre, sur ladite partie humide de la surface, de manière à former une image sur ladite partie de la surface ; et
le durcissement de l'image après ladite application ;
dans lequel ladite mise en contact est effectuée en ligne de ladite application au moyen d'un applicateur de liquide à bec pulvérisateur ;
**caractérisé en ce que** la composition d'encre comprend 80 % en poids d'acétate d'éther butylique d'éthylène glycol, 4 % en poids de cyclohexanone, 10 % en poids d'éther méthylique de dipropylèneglycol et 6 % en poids de préparation Microlith Black ; et
**en ce que** :
(a) la composition d'humidification est à 100 % du butanol et est appliquée à une densité de 0,4 g/cm², et le durcissement a lieu à une température comprise entre 150 °C et 180 °C pendant 180 secondes au moyen d'une unité de durcissement infrarouge ; ou
(b) la composition d'humidification comprend 97 % d'isopropanol et 3 % d'émulsion acrylique SCX 8383 et est appliquée à une densité de 0,4 g/cm², et le durcissement a lieu à une température comprise entre 150 °C et 170 °C pendant 60 secondes au moyen d'un unité de durcissement infrarouge.

2. Procédé selon la revendication 1, comprenant en outre, après ladite application de ladite composition d'encre liquide :
la mise en contact de ladite partie de la surface avec ladite composition d'humidification.

3. Procédé selon la revendication 1, dans lequel ladite surface est un vêtement à base dudit tissu.
